(19) Europäisches Patentamt
European Patent Office
Office européen des brevets

(11) EP 2 116 015 B1

# (12) FASCICULE DE BREVET EUROPEEN

(45) Date de publication et mention de la délivrance du brevet:
**25.01.2012 Bulletin 2012/04**

(21) Numéro de dépôt: **08762032.4**

(22) Date de dépôt: **01.02.2008**

(51) Int Cl.:
***H04L 29/08*** *(2006.01)* ***G08G 1/01*** *(2006.01)*
***G08G 1/00*** *(2006.01)* ***G08G 1/065*** *(2006.01)*
***H04L 12/28*** *(2006.01)*

(86) Numéro de dépôt international:
**PCT/FR2008/050172**

(87) Numéro de publication internationale:
**WO 2008/104673 (04.09.2008 Gazette 2008/36)**

## (54) PROCEDE D'ESTIMATION ET DE SIGNALISATION DE LA DENSITE DE NOEUDS MOBILES DANS UN RESEAU ROUTIER

VERFAHREN ZUR SCHÄTZUNG UND SIGNALISIERUNG DER DICHTE MOBILER KNOTEN IN EINEM STRASSENNETZ

METHOD FOR ESTIMATING AND SIGNALLING THE DENSITY OF MOBILE NODES IN A ROAD NETWORK

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **09.02.2007 FR 0753164**

(43) Date de publication de la demande:
**11.11.2009 Bulletin 2009/46**

(73) Titulaire: **FRANCE TELECOM**
**75015 Paris (FR)**

(72) Inventeurs:
- **JERBI, Moez**
  **F-92130 Issy Les Moulineaux (FR)**
- **MOHAMED-RASHEED, Tinku**
  **I-38100 Trento (IT)**
- **SENOUCI, Sidi-Mohammed**
  **F-22300 Lannion (FR)**

(74) Mandataire: **Desormiere, Pierre-Louis et al**
**Cabinet Beau de Loménie**
**158, rue de l'Université**
**75340 Paris Cedex 07 (FR)**

(56) Documents cités:
- **MUHAMMAD HASSAN RAZA ET AL: "Determining Density in Ad hoc Networks" ELECTRICAL AND COMPUTER ENGINEERING, CANADIAN CONFERENCE ON, IEEE, PI, mai 2006 (2006-05), pages 2160-2163, XP031004633 ISBN: 1-4244-0038-4**
- **TAMER NADEEM ET AL.: "TrafficView: Traffic Data Dissemination using Car-to-Car Communication" ACM MOBILE COMPUTING AND COMMUNICATIONS REVIEW (MC2R), SPECIAL ISSUE ON MOBILE DATA MANAGEMENT, [Online] vol. 8, no. 3, juillet 2004 (2004-07), pages 6-17, XP002459781 Extrait de l'Internet: URL:http://www.cs.rutgers.edu/ ~iftode/tv04 .pdf> [extrait le 2007-11-23]**
- **WISCHOFF L ET AL: "SOTIS - a self-organizing traffic information system" VTC 2003-SPRING. THE 57TH. IEEE SEMIANNUAL VEHICULAR TECHNOLOGY CONFERENCE. PROCEEDINGS. JEJU, KOREA, APRIL 22 - 25, 2003, IEEE VEHICULAR TECHNOLGY CONFERENCE, NEW YORK, NY : IEEE, US, vol. VOL. 4 OF 4. CONF. 57, 22 avril 2003 (2003-04-22), pages 2442-2446, XP010862319 ISBN: 0-7803-7757-5**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 2 116 015 B1

## Description

### Arrière-plan de l'invention

La présente invention se situe dans le domaine des réseaux de communication inter-véhiculaires.

De manière générale, un réseau inter-véhiculaire ou VANET (« Vehicular Ad hoc NETworks ») est un réseau ad-hoc mobile comprenant une pluralité de noeuds mobiles ou véhicules se déplaçant sur des voies de circulation et communicant entre eux par voie radio, de manière à former un réseau de communication.

L'invention concerne plus particulièrement une méthode décentralisée permettant d'estimer la densité de trafic de noeuds mobiles dans un réseau inter-véhiculaire et de diffuser cette information à travers les noeuds du réseau, chaque noeud se déplaçant selon des voies de circulation d'un réseau géographique déterminé, les voies de circulation formant entre elles une pluralité d'intersections.

De manière connue, chaque noeud mobile d'un réseau inter-véhiculaire est apte à se localiser dans un réseau géographique et adapté à maintenir à jour une table de voisinage comprenant des informations relatives à la position de ses noeuds voisins.

A partir de sa propre table de voisinage, chaque noeud calcule ses conditions de trafic local. Ensuite, chaque noeud diffuse des informations relatives à ses conditions de trafic local à tous ses noeuds voisins et à intervalles de temps réguliers.

Cette diffusion massive peut provoquer une saturation de la bande passante du réseau, notamment dans le cas où le réseau routier comprend un nombre de noeuds élevé. De plus, étant donné que deux noeuds voisins partagent globalement les mêmes conditions de trafic local, le fait de calculer les conditions de trafic au niveau de chaque noeud mobile implique une redondance qui se traduit non seulement au niveau du calcul mais également au niveau de la diffusion de ces conditions de trafic. En effet, deux noeuds voisins vont fournir globalement les mêmes informations de conditions de trafic.

Par ailleurs, le document Raza et al., « Determining density in Ad hoc networks » Electrical and Computer Engineering, Canadian conférence on IEEE, PI 2006, 2160, décrit de manière théorique un algorithme de détermination de la densité dans un réseau *ad hoc* par recensement des noeuds.

### Objet et résumé de l'invention

L'invention est définie par les revendications indépendantes 1 et 10-13.

La présente invention permet de pallier les inconvénients mentionnés ci-avant, en proposant un procédé d'estimation de la densité de noeuds mobiles d'un réseau ad-hoc dans lequel chaque noeud se déplace selon des voies de circulation d'un réseau géographique déterminé, les voies de circulation formant entre elles une pluralité d'intersections, chaque noeud mobile étant apte à se localiser dans le réseau géographique et adapté à maintenir à jour une table de voisinage comprenant des informations relatives à la position de ses noeuds voisins.

Le procédé selon l'invention est caractérisé en ce que la densité de noeuds mobiles sur chaque voie de circulation entre deux intersections successives est déterminée lors d'une première phase comprenant:

- une étape de découpage de la voie de circulation en une pluralité de cellules de couverture réparties par exemple de manière adjacente le long de la voie de circulation ;
- une étape de dénombrement intracellulaire, lorsque au moins un noeud mobile, est localisé au voisinage du centre d'une cellule de couverture, ledit noeud mobile étant dit « noeud principal » et déterminant, à partir de sa table de voisinage, des données de densité de trafic local, ces données comprenant par exemple au moins le nombre de noeuds mobiles à l'intérieur de cette cellule ; et
- une étape d'agrégation des données de densité de trafic local au niveau de chaque cellule de couverture, de manière à déterminer la densité de trafic de noeuds mobiles sur la voie de circulation.

Le procédé selon l'invention permet d'estimer la densité de trafic sur une voie de circulation de manière totalement décentralisée. L'utilisation de noeuds principaux permet d'effectuer un dénombrement efficace des noeuds sans redondance, étant donné qu'un noeud principal se charge de déterminer des données de densité de trafic locales au niveau de chaque cellule.

Le découpage de la voie de circulation en une pluralité de cellules de couverture permet de définir pour chaque cellule un groupe de noeuds mobiles localisés à l'intérieur de cette cellule. Dans le cas particulier où le noeud principal est un noeud localisé au voisinage du centre d'une cellule de couverture, c'est à partir de ce découpage fixe de la voie de circulation, qu'un noeud mobile, apte à se localiser à chaque instant, détermine qu'il a le statut de noeud principal et qu'il sait, par conséquent, qu'il doit effectuer le dénombrement du, groupe de noeuds associés à la cellule à laquelle il appartient. Ainsi, un noeud mobile acquiert, de manière autonome, le statut de noeud principal, sans nécessiter d'infrastructure centralisée additionnelle. D'autres critères peuvent être utilisés pour choisir le noeud principal, tels que par exemple la vitesse de déplacement du noeud, la durée écoulée depuis son entrée dans la cellule, la proximité de ses noeuds voisins, etc.

Le dénombrement des groupes de noeuds mobiles associés à chaque cellule permet de caractériser de manière plus fine la densité de trafic, en fournissant une distribution spatiale des noeuds mobiles sur la voie de circulation. En particulier, ce dénombrement local permet de localiser la présence de fortes densités de noeuds mobiles sur la voie de circulation, en identifiant une cellule présentant une telle densité.

Selon une caractéristique de l'invention, lors de l'étape d'agrégation, un paquet d'agrégation est transmis de cellule en cellule avec au moins un noeud principal insérant dans le paquet d'agrégation le nombre de noeuds mobiles de la cellule à laquelle il appartient.

De manière avantageuse, un même paquet d'agrégation permet de collecter l'intégralité des données de densité de trafic disponibles sur la voie de circulation. De cette manière, on limite le nombre de paquets transmis nécessaires pour transmettre l'information.

Dans le cas d'un réseau ad-hoc dense (comprenant un grand nombre de noeuds) et dont la topologie est hautement dynamique, ceci permet d'éviter de saturer la bande passante allouée au réseau. De ce fait, le procédé selon l'invention est particulièrement bien adapté aux environnements urbains.

Selon une autre caractéristique de l'invention, le paquet d'agrégation est généré par un noeud mobile dit noeud générateur ayant parcouru l'intégralité de la voie de circulation reliant une intersection source à une intersection destination et se trouvant à proximité de l'intersection destination. De plus, le paquet d'agrégation est transmis de cellule en cellule, depuis la cellule adjacente à l'intersection de destination jusqu'à l'intersection source.

Le paquet d'agrégation est généré au niveau de l'intersection destination puis transmis en sens inverse de déplacement du véhicule générateur, c'est-à-dire de l'intersection destination vers l'intersection source. De cette manière, chaque noeud qui est susceptible d'entrer sur la voie de circulation au niveau de l'intersection source pour atteindre l'intersection destination, reçoit le paquet d'agrégation contenant les informations de densité de trafic dernièrement connues sur cette voie de circulation.

Ces informations constituent une estimation fiable de la densité de trafic sur la voie de circulation au moment où un noeud se trouve au niveau de l'entrée de cette voie de circulation étant donné qu'entre le moment où le paquet d'agrégation est généré et le moment où celui-ci arrive au niveau de l'intersection source, une durée très courte s'est écoulée (durée de remontée du paquet d'agrégation le long de la voie de circulation).

Selon une autre caractéristique de l'invention, le noeud générateur est un noeud mobile ayant préalablement modifié un paquet d'agrégation en tant que noeud principal.

Ainsi, parmi tous les noeuds mobiles arrivant au niveau de l'intersection destination dans un intervalle de temps donné, un seul générera un paquet d'agrégation. De cette manière, l'émission de paquet d'agrégation est autorégulée et limitée dans le temps, ce qui permet de limiter la bande passante du réseau.

Selon une première variante de réalisation de l'invention, lors de l'étape de découpage, chaque cellule de couverture est préalablement définie sur une carte numérique représentative du réseau géographique en association avec un point d'ancrage situé au centre de cette cellule et dont les coordonnées sont mémorisées. De plus, lors de l'étape d'agrégation, le paquet d'agrégation est transmis de cellule en cellule suivant les points d'ancrage définis sur la carte représentative du réseau géographique.

L'opération de découpage préalable sur la carte permet au noeud de s'affranchir du calcul des coordonnées de points d'ancrage en temps réel. De ce fait, cette variante de réalisation est particulièrement avantageuse dans le cas où le découpage d'une voie de circulation nécessite un grand nombre de cellules (par exemple dans le cas où la voie de circulation à découper est longue et/ou la portée de transmission des noeuds est courte). Cette variante de réalisation est particulièrement bien adaptée aux applications nécessitant un temps de réponse très court.

Selon une deuxième variante de réalisation de l'invention, lors de l'étape de découpage, le noeud générateur calcule les coordonnées géographiques de points d'ancrage correspondant au centre de chaque cellule à partir d'un paramètre de longueur de la voie de circulation et d'un paramètre de portée de transmission d'un noeud mobile, et lors de l'étape d'agrégation, le paquet d'agrégation est transmis de cellule en cellule suivant les points d'ancrage calculés lors de l'étape de découpage.

La réalisation de ce découpage en temps réel permet de mettre en oeuvre l'invention directement dans des systèmes de navigation utilisant des cartes routières numériques standards sans modifications.

Selon une autre caractéristique de l'invention, la taille de chaque cellule de couverture est définie en fonction de la portée de transmission d'un noeud mobile.

De manière avantageuse, lorsque le rayon des cellules de couverture est au moins égal à la portée de transmission d'un noeud mobile, l'ensemble des voisins d'un noeud principal d'une cellule correspond au groupe de noeuds mobiles associés à cette cellule, ces noeuds étant identifiés dans la table de voisinage du noeud principal. De ce fait, les données de densité de trafic local de cette cellule sont directement obtenues par le noeud principal à partir de sa table de voisinage. Autrement dit, un tel découpage permet d'obtenir de manière simple et efficace, une densité de noeuds locale d'une cellule, à partir de la table de voisinage d'un noeud principal.

Selon une autre caractéristique de l'invention, le procédé selon l'invention comprend en outre une étape d'analyse des données de trafic contenues dans le paquet d'agrégation reçu au niveau d'une intersection, l'analyse consistant à calculer au moins un paramètre de caractérisation de la densité de trafic sur la voie de circulation choisi parmi :

- la densité locale de noeuds mobiles ;
- la densité moyenne de noeuds mobiles ;
- la variance de la densité locale de noeuds mobiles.

La densité moyenne de noeuds mobiles et la variance sont particulièrement bien adaptées pour caractériser la densité de trafic globale d'une voie de circulation.

La densité locale de noeuds mobiles (effectif d'un groupe de noeuds associés à une cellule) sera utilisée dans des applications nécessitant des informations de densité de trafic segmentée.

Selon une autre caractéristique de l'invention, le procédé selon l'invention comprend une phase de signalisation comprenant :

- une étape de génération, lors de laquelle un noeud mobile situé au niveau d'une intersection génère un paquet de signalisation à partir d'un paquet d'agrégation relatif à une voie de circulation, si la densité de trafic sur cette voie de circulation est supérieure à un seuil prédéterminé ; et
- une étape de transmission du paquet de signalisation aux noeuds principaux de chaque cellule, chaque noeud principal diffusant le paquet de signalisation à ses noeuds voisins.

La génération et la diffusion d'un paquet de signalisation RDP relatif à chaque voie de circulation permet d'informer en temps réel les noeuds mobiles proches, de l'état de trafic sur les voies de circulation qu'ils sont susceptibles d'emprunter.

Plutôt que de générer un paquet de signalisation RDP suite à l'analyse de chaque paquet d'agrégation CDP, un paquet de signalisation RDP relatif à une voie de circulation est généré uniquement lorsque la densité de trafic sur cette voie dépasse une valeur seuil prédéterminée. De cette manière, on limite le nombre de paquets de signalisation émis à travers le réseau et on évite de surcharger inutilement la bande passante du réseau.

Un découpage d'une voie en cellules dont le rayon est au moins égal à la portée de transmission d'un noeud mobile optimise la diffusion d'un paquet de signalisation RDP par un noeud principal à l'intérieur d'une cellule. En effet, lors d'une seule opération de diffusion, le noeud principal transmet le paquet de signalisation RDP au groupe de noeuds associés à cette cellule qui correspondent à ses voisins.

Selon une autre caractéristique de l'invention, le paquet de signalisation est transmis de cellule en cellule, dans une zone limitée par un nombre prédéterminé d'intersections à parcourir.

Chaque paquet de signalisation RDP est transmis à l'intérieur d'une zone limitée et non pas à travers tout le réseau, ce qui permet de limiter le nombre de paquets émis dans le réseau et d'éviter des problèmes de saturation de bande passante dans le cas où le réseau est dense.

L'invention vise également un terminal de communication sans fil destiné à former un noeud mobile d'un réseau ad-hoc comprenant une pluralité de noeuds mobiles se déplaçant selon des voies de circulation d'un réseau géographique déterminé dans lequel les voies de circulation forment entre elles une pluralité d'intersections.

Le terminal selon l'invention est associé à des moyens de localisation pour déterminer sa position instantanée dans le réseau géographique et des moyens pour maintenir à jour une table de voisinage comprenant des informations relatives à la position de ses noeuds voisins.

Le terminal selon l'invention comprend en outre :

- des moyens de dénombrement, pour déterminer à partir de sa table de voisinage, des données de densité de trafic local comprenant par exemple au moins le nombre de noeuds mobiles de la cellule à laquelle il appartient ; et
- des moyens d'écriture pour insérer les données de densité de trafic local dans un paquet d'agrégation ; et
- des moyens de réception et de transmission dudit paquet d'agrégation.

Selon une autre caractéristique de l'invention, le terminal comprend en outre :

- des moyens pour générer le paquet d'agrégation, lorsque le terminal a parcouru l'intégralité de la voie de circulation reliant une intersection source à une intersection destination et qu'il se trouve à proximité de l'intersection destination ;
- des moyens de transmission pour transmettre le paquet d'agrégation de cellule en cellule, depuis la cellule adjacente à intersection de destination jusqu'à l'intersection source.

Selon une autre caractéristique de l'invention, le terminal selon l'invention comprend en outre :

- des moyens pour calculer les coordonnées géographiques de points d'ancrage correspondant aux centres de cellules de couverture réparties de préférence de manière adjacente le long de la voie de circulation ; et
- des moyens pour insérer les coordonnées géographiques des points d'ancrage dans le paquet d'agrégation.

L'invention vise également un procédé de routage de paquets de données dans un réseau ad-hoc comprenant une pluralité de noeuds mobiles se déplaçant selon des voies de circulation d'un réseau géographique déterminé dans lequel les voies de circulation forment entre elles une pluralité d'intersections.

Le procédé de routage comprend une étape d'établissement d'un chemin de routage pour la transmission des paquets à travers au moins une partie des noeuds mobiles, le chemin de routage étant établi en fonction des conditions de trafic en temps réel sur les voies de circulation, déterminées selon le procédé d'estimation selon l'invention.

Les différentes étapes du procédé d'estimation et de signalisation selon l'invention peuvent être réalisées par des instructions de programmes informatiques.

En conséquence, l'invention vise également un programme informatique comprenant des instructions pour l'exécution des étapes du procédé d'estimation et de signalisation décrit ci-dessus, lorsque ce programme est exécuté par un processeur d'un terminal de communication.

Ce programme peut utiliser n'importe quel langage de programmation et être sous la forme de code source, de code objet, ou de code intermédiaire entre code source et code objet, tel que dans une forme partiellement compilée, ou dans n'importe quelle autre forme souhaitable.

L'invention vise également un support d'enregistrement lisible par un ordinateur sur lequel est enregistré un programme informatique comprenant des instructions pour l'exécution des étapes du procédé d'estimation et de signalisation décrit ci-avant.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

Par ailleurs, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé d'estimation et de signalisation selon l'invention.

L'invention vise également un signal destiné à être transmis à travers des noeuds mobiles d'un réseau de communication ad-hoc, le signal transportant un paquet de données d'agrégation (CDP) destiné à être utilisé dans le procédé selon l'invention. Le paquet de données d'agrégation selon l'invention comprend au moins :

- un identifiant de la voie de circulation associée au paquet de données d'agrégation ;
- un identifiant des cellules de couverture de la voie de circulation ;
- des coordonnées d'une pluralité de points d'ancrage, chaque point d'ancrage étant associé à une cellule de couverture ; et
- un champ destiné à stocker des données de densité de trafic local à chaque cellule de couverture.

Selon une caractéristique de l'invention, le paquet de données d'agrégation comprend en outre les coordonnées d'une intersection source vers laquelle le paquet de données d'agrégation est acheminé lors de l'étape d'agrégation du procédé selon l'invention.

## Brève description des dessins

D'autres caractéristiques et avantages de l'invention ressortiront de la description suivante de modes de réalisation de l'invention, donnés à titre d'exemples non limitatifs, en référence aux dessins annexés, sur lesquels :

- la figure 1 illustre de manière schématique un exemple de découpage d'une voie de circulation conformément à la présente invention;
- la figure 2 illustre de manière schématique un exemple de mise en oeuvre d'une première phase du procédé selon la présente invention ;
- la figure 3A illustre sous forme d'organigramme un exemple de mise en oeuvre de la première phase du procédé conforme à l'invention selon une première variante de réalisation ;

- la figure 3B illustre sous forme d'organigramme un exemple de mise en oeuvre de la première phase du procédé conforme à l'invention selon une deuxième variante de réalisation ;
- la figure 4 illustre sous forme d'organigramme un exemple de mise en oeuvre de l'étape d'agrégation de données de trafic du procédé selon l'invention ;
- la figure 5 illustre sous forme d'organigramme un exemple de mise en oeuvre de l'étape de transmission d'un paquet d'agrégation selon la présente invention ;
- la figure 6 illustre un exemple de mise en oeuvre d'une deuxième phase du procédé selon la présente invention ;
- la figure 7 illustre sous forme d'organigramme un exemple de mise en oeuvre de l'étape de transmission d'un paquet d'agrégation selon la présente invention ;
- la figure 8 illustre sous forme d'organigramme la mise en oeuvre du transfert d'un paquet de signalisation RDP le long d'une voie de circulation ;
- la figure 9 illustre de manière schématique un réseau inter-véhiculaire, dans lequel est mis en oeuvre le procédé selon l'invention pour le routage de paquets de données; et
- la figure 10, illustre de manière schématique un réseau inter-véhiculaire, dans lequel est mis oeuvre le procédé selon invention pour la navigation d'un noeud mobile.

## Description détaillée de modes de réalisation de l'invention

L'invention va maintenant être décrite de manière détaillée dans le cadre d'un réseau ad-hoc inter-véhiculaire comprenant une pluralité de noeuds mobiles se déplaçant selon des voies de circulation d'un réseau routier.

De manière connue, chaque noeud mobile est formé par un terminal de communication apte à communiquer avec ses noeuds voisins, le terminal étant embarqué dans un véhicule. Le terminal de communication comprend une interface de communication sans fil, constituée par exemple par un émetteur/récepteur Wi-Fi™ utilisant le protocole IEEE 802.11 et dont la portée de transmission maximale est d'environ 300 mètres.

Par la suite, le terme « noeud voisin » d'un noeud de référence désignera chaque noeud situé dans le domaine de portée de transmission du noeud de référence.

Le noeud mobile comprend en outre des moyens d'identification d'une voie de circulation sur laquelle il se trouve, ces moyens étant constitués par une carte routière numérique représentative du réseau géographique routier à travers lequel il se déplace.

Les moyens d'identification sont couplés à des moyens de localisation aptes à déterminer la position géographique instantanée du noeud mobile. Ces moyens de localisation peuvent être constitués par un récepteur GPS « Global Positioning System ».

Pour une meilleure compacité, les moyens de localisation et les moyens d'identification peuvent être intégrés dans le même terminal de communication.

Le noeud mobile selon l'invention comprend en outre :

- des moyens pour maintenir à jour une table de voisinage dans laquelle sont enregistrées des informations relatives à ses noeuds voisins, telles que leur position ainsi que leur vitesse et direction de déplacement ;
- des moyens de dénombrement pour déterminer à partir de sa table de voisinage, des données de densité de trafic local comprenant au moins le nombre de ses noeuds voisins ;
- des moyens d'écriture pour insérer dans un paquet d'agrégation de données les données de densité de trafic local ;
- des moyens de réception et de transmission du paquet d'agrégation en provenance ou vers d'autres noeuds mobiles ; et
- des moyens de génération du paquet d'agrégation.

Les moyens décrits ci-dessus sont des moyens logiciels exécutés par un moyen de calcul du terminal de communication selon l'invention, constitué par exemple par un microprocesseur.

Chaque noeud mobile maintient sa propre table de voisinage, à partir de messages HELLO échangés périodiquement avec ses noeuds voisins, conformément au protocole OLSR « Optimized Link State Routing ».

La figure 1 représente de manière schématique, un exemple de découpage selon l'invention d'une voie de circulation X reliant deux intersections consécutives notés $I_n$ et $I_{n+1}$ d'un réseau routier.

A titre d'exemple, la voie de circulation identifiée par l'identifiant X est découpée en quatre cellules de couverture $X_1$, $X_2$, $X_3$, $X_4$ circulaires adjacentes de même rayon R. On notera que, de manière générale, chaque voie de circulation du réseau routier est découpée en un nombre entier k de cellules de couverture $X_1,...,X_k$ adjacentes dont les centres $C_1,...,C_k$ sont régulièrement répartis le long de la voie de circulation X, de sorte que l'intégralité de la voie de circulation X soit couverte de manière continue par l'ensemble des cellules de couverture $X_1,...,X_k$. k étant déterminé en fonction de la longueur L de la voie de circulation X et de la portée D de transmission d'un noeud mobile.

Au centre de chaque cellule de couverture $X_1$, $X_2$, $X_3$, $X_4$ de la voie de circulation X est associé un point d'ancrage noté respectivement $C_1$, $C_2$, $C_3$, $C_4$ autour duquel est définie une zone centrale circulaire de rayon W tel que W < R, notée respectivement $Z_1$, $Z_2$, $Z_3$, $Z_4$. Pour simplifier, les centres $C_1$, $C_2$, $C_3$, $C_4$ des cellules de couverture seront notés de la même manière que les points d'ancrage $C_1$, $C_2$, $C_3$, $C_4$.

Selon l'invention, la valeur du rayon R des cellules de couverture $X_1$, $X_2$, $X_3$, $X_4$ est égal à la portée de transmission Q d'un noeud mobile du réseau. De cette manière, l'ensemble des noeuds voisins d'un noeud localisé au niveau d'un point d'ancrage correspond à l'ensemble des noeuds se trouvant à l'intérieur de la cellule à laquelle il appartient, formant ainsi un groupe de noeuds associés à cette cellule.

En pratique, selon les recommandations du standard DSRC (« Dedicated Short Range Communications »), la portée de transmission Q est un paramètre système fixé entre 100 et 300 mètres. Dans l'exemple présent, la valeur optimale de la portée est Q=300 m. Bien évidemment, cette valeur pourra être ajustée en fonction, de la largeur des voies de circulation à couvrir. La valeur de cette portée Q pourra notamment être diminuée dans le cas où la densité de voies de circulation est élevée pour éviter à une même cellule de s'étendre sur plusieurs voies de circulation.

Comme illustré sur la figure 1, le découpage de la voie de circulation X est tel que deux cellules consécutives $X_1$-$X_2$, $X_2$-$X_3$, $X_3$-$X_4$, (ou groupes de noeuds associés) présentent une zone de recouvrement notée respectivement $O_1$, $O_2$, $O_3$, de sorte que chaque noeud se déplaçant d'une cellule courante vers une cellule adjacente appartienne au moins à un groupe de noeuds. Chaque zone de recouvrement permet de réaliser un « hand-over » afin d'assurer la continuité des communications, précisément au moment où un noeud mobile passe d'une cellule à une autre.

Par la suite, on dira qu'un noeud mobile du réseau ad-hoc est un « noeud principal » lorsqu'il est localisé au niveau d'un point d'ancrage c'est-à-dire à l'intérieur de la zone centrale $Z_1$, $Z_2$, $Z_3$, $Z_4$ d'une cellule de couverture $X_1$, $X_2$, $X_3$, $X_4$. Etant donné que chaque noeud connaît sa propre position géographique instantanée fournie par un récepteur GPS, il peut déterminer à chaque instant s'il se trouve dans la zone centrale $Z_1$, $Z_2$, $Z_3$, $Z_4$ d'une cellule de couverture $X_1$, $X_2$, $X_3$, $X_4$, à condition qu'il connaisse les coordonnées de chaque point d'ancrage $C_1$, $C_2$, $C_3$, $C_4$ de la voie de circulation X sur laquelle il se déplace.

La définition des coordonnées de ces points d'ancrage $C_1$, $C_2$, $C_3$, $C_4$ est effectuée lors de l'opération de découpage de la voie de circulation X à partir de la carte routière numérique représentative du réseau routier. L'opération de découpage peut être réalisée préalablement (première variante de réalisation) ou en temps réel par un noeud mobile (deuxième variante de réalisation) comme décrit ci-après.

Le procédé selon l'invention va être décrit en référence aux figures 2, 3A et 3B.

Lors d'une première phase du procédé selon l'invention, la densité de noeuds mobiles est déterminée sur chaque voie de circulation reliant deux intersections successives, et en particulier sur la voie de circulation X de la figure 2, entre une intersection source $I_1$ et une intersection destination $I_2$.

Dans cet exemple, la voie de circulation X est découpée en trois cellules identifiées par $X_1$, $X_2$, $X_3$ comprenant chacune un point d'ancrage respectif $C_1$, $C_2$, $C_3$. Sur cette voie de circulation X est représenté, à un temps donné $t_1$, un ensemble de noeuds mobiles 1-17 se déplaçant sur la voie de circulation X. Chaque cellule de couverture $X_1$, $X_2$, $X_3$ comprend au moins un noeud principal 1, 3, 6, 8, 12, 14 situé au niveau d'un point d'ancrage.

Une première variante de réalisation de la première phase du procédé selon l'invention va être maintenant décrite en référence aux figures 2 et 3A, de manière à déterminer la densité de trafic sur la voie de circulation X.

Selon cette variante de réalisation, le découpage des voies de circulation du réseau routier est préalablement réalisé sur une carte routière numérique représentative du réseau routier, lors d'une étape de découpage préalable E0.

L'opération de découpage consiste à déterminer, à partir de la carte routière numérique, le nombre de cellules de couvertures $X_1$, $X_2$, $X_3$ nécessaire pour couvrir la voie de circulation X de manière contigüe ainsi que la position (coordonnées géographiques) des points d'ancrage $C_1$, $C_2$, $C_3$ correspondants. Les coordonnées géographiques de ces points d'ancrage $C_1$, $C_2$, $C_3$ sont enregistrées sur la carte routière numérique, en association avec l'identifiant de chaque voie de circulation, formant ainsi une carte routière enrichie. Cette carte enrichie est ensuite chargée dans le dispositif de navigation embarqué sur le noeud mobile. Cette opération de découpage est réalisée pour chaque voie de circulation du réseau routier représentée sur la carte routière. Ainsi, pour chaque identifiant de voie de circulation, chaque noeud mobile a connaissance préalable d'une séquence de points d'ancrage {$C_3$, $C_2$, $C_1$} définissant la position de l'ensemble des cellules de couverture associées à la voie de circulation X.

Après avoir parcouru la totalité de la voie de circulation X en partant de l'intersection source $I_1$ jusqu'à l'intersection destination $I_2$, un noeud mobile 17 appartenant à la dernière cellule $X_3$ adjacente à l'intersection destination $I_2$ est sur le point de pénétrer dans l'intersection, destination $I_2$. Si ce noeud mobile 17 a préalablement obtenu le statut de noeud principal de la cellule $X_3$ dans laquelle il se trouve, alors au moment où il pénètre dans l'intersection destination $I_2$, ce noeud mobile 17 acquiert le statut de noeud « générateur » 17, lors d'une étape d'élection E2 (élection d'un noeud générateur). Par la suite, on dira que le noeud acquiert le statut de noeud principal dès lors qu'il se trouve dans la zone centrale d'une cellule, autrement dit au niveau du centre de cette cellule.

Lors d'une étape de génération E4, le noeud générateur 17 déterminé lors de l'étape d'élection E2, génère un paquet d'agrégation CDP (« Cells' Density Packet ») destiné à agréger des données de densité de trafic local au niveau de chaque cellule de couverture.

La structure générale ou format d'un paquet d'agrégation CDP est décrite dans le tableau 1 ci-dessous, où $N_1$,...$N_k$ désignent par exemple le nombre de noeuds présents dans les cellules $X_1$,...$X_k$ respectivement.

Tableau 1. Format d'un paquet d'agrégation CDP

| Cells Data Packet (CDP) | | |
|---|---|---|
| Identifiant de la voie de circulation courante : X | Instant de transmission : $t_1$ | Intersection source $I_1$ |
| Identifiant des cellules de couverture | Position du centre des cellules de couverture | Données de densité de trafic au sein des cellules |
| $X_1$ | $C_1$ | $N_1$ |
| $X_2$ | $C_2$ | $N_2$ |
| ... | ... | ... |
| $X_k$ | $C_k$ | $N_k$ |

Lorsque le noeud mobile 17 acquiert le statut de noeud générateur lors de l'étape d'élection E2, à l'instant $t_1$, celui-ci génère immédiatement le paquet CDP dans lequel il insère :

- l'identifiant X de la voie de circulation sur laquelle il se situe encore partiellement et qu'il vient de parcourir, dans le champ « Identifiant de la voie de circulation courante » ;
- le temps $t_1$ correspondant à l'instant de génération du paquet CDP par le noeud générateur 17, dans le champ « Instant de transmission »;
- les coordonnées S de l'intersection source $I_1$, dans le champ « Intersection source » ;
- l'identifiant $X_1$, $X_2$, $X_3$ de chaque cellule de couverture $X_1$, $X_2$, $X_3$ de la voie de circulation X, dans le champ « Identifiant de la cellule » ; et
- les coordonnées géographiques (références GPS) des points d'ancrage $C_1$, $C_2$, $C_3$ correspondant aux centres de chaque cellule, dans le champ « position du centre de la cellule ».

Conformément à la première variante de réalisation, les identifiants $X_1$, $X_2$, $X_3$ des cellules et les coordonnées du centre de chacune de ces cellules (points d'ancrage $C_1$, $C_2$, $C_3$) sont enregistrés sur la carte routière numérique préalablement chargée sur l'appareil de navigation de chaque noeud mobile, lors de l'étape de découpage préalable E0. Ainsi, le noeud générateur 17 connaissant sa position et donc l'identifiant de la voie de circulation X sur laquelle il se trouve, obtient instantanément par lecture de la carte numérique les coordonnées des points d'ancrage $C_1$, $C_2$, $C_3$ de la voie de circulation X.

Lors d'une étape de dénombrement intracellulaire E5, chaque noeud principal 1, 3, 6, 8, 12, 14 d'une cellule de couverture $X_1$, $X_2$, $X_3$ détermine, à partir de leur table de voisinage respective, des données de densité de trafic local dans chaque cellule. Par la suite, le terme « trafic local » désignera le trafic au sein d'une cellule de couverture. Les données de densité de trafic local correspondent ici au nombre de noeuds mobiles $N_1$, $N_2$, $N_3$ présents à l'intérieur de chaque cellule, autrement dit à l'effectif du groupe de noeuds associé à chaque cellule.

On notera, que lors de l'étape de génération E4, le noeud générateur 17 laisse le champ « Données de densité de trafic » libre pour chaque cellule identifiée dans le paquet d'agrégation CDP. Ce champ sera rempli ultérieurement par un noeud principal de chaque cellule de couverture, lors d'une étape d'agrégation E6.

Lors de cette étape d'agrégation E6, le paquet d'agrégation CDP est transmis de cellule en cellule, en transitant successivement par les noeuds principaux 14, 6 et 1 des cellules $X_3$, $X_2$, $X_1$, depuis le noeud générateur 17 jusqu'au niveau de l'intersection source $I_1$.

Dès lors que le noeud principal 1 de la cellule $X_1$ (cellule adjacente à la première intersection $I_1$) a enrichi le paquet d'agrégation CDP en y insérant le nombre de noeuds mobiles $N_1$ de la cellule $X_1$, le paquet CDP contient l'intégralité des données de densité de trafic locale de chaque cellule (c'est-à-dire les nombres de noeuds mobiles $N_1$, $N_2$ et $N_3$).

Lors d'une étape de diffusion E8, le paquet d'agrégation CDP est alors diffusé à travers l'intersection source $I_1$. Pour cela, le paquet d'agrégation CDP est transmis à tous les noeuds présents au niveau de cette intersection source $I_1$. Dans l'exemple de la figure 2, le paquet d'agrégation est reçu par le noeud mobile 18 localisé au niveau de l'intersection source $I_1$, c'est-à-dire à l'intérieur d'une zone centrée sur le point de coordonnées S de l'intersection source $I_1$.

Lorsque le paquet d'agrégation CDP est reçu par au moins un noeud mobile 18 au niveau de la première intersection $I_1$ (étape de test E10 positive), la première phase du procédé se termine (étape finale E12). Dans le cas contraire (étape de test-E10 négative), l'étape de diffusion E8 se poursuit, jusqu'à ce que le paquet CDP soit reçu par un noeud mobile au niveau de l'intersection source $I_1$. En pratique, si le paquet CDP n'a pas été reçu par un noeud au bout d'un certain temps prédéterminé, le paquet CDP est abandonné (étape finale E12) étant donné que les conditions de trafic sur la voie de circulation X ont pu évoluer drastiquement depuis l'instant d'émission $t_1$ du paquet CDP.

Selon une deuxième variante de réalisation du procédé conforme à l'invention (figure 3B), le découpage des voies de circulation du réseau routier est réalisé en temps réel lors d'une étape de découpage E'0, par le noeud générateur 17 déterminé lors de l'étape d'élection E2.

Pour cela, une fonction F de découpage en temps réel est implémentée par des moyens logiciels exécutés par l'appareil de navigation du noeud générateur 17. Cette fonction génère les coordonnées de points d'ancrage $C_1$, $C_2$, $C_3$, en fonction de l'identifiant de la voie de circulation X sur laquelle se trouve le noeud générateur 17, la longueur L de cette voie de circulation X et le rayon R d'une cellule de couverture.

Après avoir réalisé le découpage en temps réel lors de l'étape E'0, le noeud générateur 17 génère le paquet d'agrégation CDP tel que décrit précédemment, lors de l'étape de génération E4.

La différence avec la première variante de réalisation réside dans le fait que le découpage n'est pas réalisé au préalable mais en temps réel et par un noeud mobile. De ce fait, toutes les autres étapes E4, E5, E6, E8, E10, E12 décrites dans le cadre de la première variante de réalisation en référence à la figure 3A sont les mêmes pour la deuxième variante de réalisation, et par conséquent, celles-ci ne seront pas à nouveau décrites.

L'opération de découpage en temps réel évite à chaque noeud mobile de charger préalablement sur son appareil de navigation embarqué des cartes de navigation numériques enrichies sur lesquelles sont enregistrés les points d'ancrage pour chaque voie de circulation. Cette deuxième variante de réalisation permet donc de mettre en oeuvre l'invention dans des systèmes de navigation utilisant des cartes routières numériques classiques, c'est-à-dire non enrichies.

L'étape d'agrégation E6 va maintenant être décrite de manière détaillée en référence aux figures 4 et 2.

Lors d'une, sous-étape de vérification E60, le noeud générateur 17 vérifie que le paquet d'agrégation CDP comprend les coordonnées des points d'ancrage $C_3$, $C_2$, $C_1$ et les coordonnées S de l'intersection source $I_1$ déterminées lors de l'étape de découpage E0 préalable (première variante de réalisation) ou lors de l'étape de découpage E'0 en temps réel (deuxième variante de réalisation). Ces coordonnées ont été normalement insérées lors de l'étape de génération E4 du paquet CDP par le noeud générateur 17 comme décrit précédemment.

L'ensemble des coordonnées des points d'ancrage $\{C_3, C_2, C_1\}$ et des coordonnées S de l'intersection source $I_1$ définit un chemin destiné à être suivi par le paquet d'agrégation CDP pour atteindre l'intersection source $I_1$. Ce chemin passe par la zone centrale $Z_3$, $Z_2$, $Z_1$ des cellules de couverture $X_3$, $X_2$, $X_1$ respectives.

Lors d'une sous-étape de transmission E62, le paquet d'agrégation CDP est transmis par un noeud porteur du paquet vers le point d'ancrage suivant. Dans l'exemple de la figure 2, le paquet CDP transite successivement par les noeuds principaux 14, 6, 1 situés au niveau du centre des cellules $X_3$, $X_2$, $X_1$ respectivement.

Lorsque le paquet CDP est reçu par un noeud principal, ce dernier enrichit le paquet d'agrégation CDP, lors d'une sous-étape d'écriture E64, en y insérant le nombre de noeuds dans la cellule de couverture à laquelle il appartient.

Ainsi, le paquet CDP est successivement enrichi par les noeuds principaux 14, 6, 1 des cellules $X_3$, $X_2$, $X_1$ respectivement. Ainsi, comme représenté sur la figure 2, au fur et à mesure que le paquet CDP transite par les noeuds principaux 14, 6, 1, les nombres $N_3$, $N_2$, $N_1$ de noeuds présents dans les cellules $X_3$, $X_2$, $X_1$ respectives sont successivement insérés, de sorte que le paquet CDP est totalement complété lorsqu il est émis par le noeud principal 1 de la cellule $C_1$ vers l'intersection source $I_1$.

Tant que le paquet d'agrégation CDP n'a pas atteint la dernière cellule $X_1$ sur le chemin prédéfini, c'est-à-dire la cellule adjacente à la première intersection $I_1$ (étape de test E66 négative), les sous-étapes de transmission E62 et d'écriture E64 sont enchaînées successivement comme décrit ci-dessus.

Dès que le paquet d'agrégation CDP atteint cette dernière cellule $X_1$ (étape de test E66 positive), le paquet d'agrégation CDP totalement complété est transmis à destination de l'intersection source $I_1$, lors d'une sous-étape de transmission E68.

L'étape d'agrégation E6 se termine lorsque le paquet d'agrégation CDP atteint la première intersection h (sous-étape finale E70).

Dans l'exemple de réalisation décrit ci-dessus, l'étape de dénombrement est réalisée à intervalles de temps réguliers, par chaque noeud principal d'une cellule de couverture. Toutefois, selon une variante de réalisation, l'étape de dénombrement intracellulaire E5 sera comprise dans l'étape d'aggrégation E6 et s'effectuera de manière ponctuelle : elle sera par exemple déclenchée par la réception d'un paquet d'agrégation CDP au niveau d'un noeud principal.

La sous-étape de transmission E62 du paquet d'agrégation CDP au point d'ancrage suivant va maintenant être décrite de manière détaillée en référence aux figures 5 et 2. Cette sous-étape de transmission E62 comprend une pluralité d'étapes E620 - E628 décrites ci-dessous.

La sous-étape de transmission E62 débute lorsque le noeud porteur du paquet d'agrégation CDP est prêt à transmettre le paquet (étape E620). Dans l'exemple de la figure 2, au moment où le paquet d'agrégation CDP est généré par le noeud générateur 17, c'est le noeud générateur 17 lui-même qui est porteur du paquet d'agrégation CDP et prêt à transmettre le paquet vers le point d'ancrage $C_3$.

Lors d'une étape de sélection E621, le noeud porteur du paquet sélectionne, à partir de sa table de voisinage, un nombre entier M de noeuds voisins se déplaçant en direction de la première intersection $I_1$.

Selon l'exemple de la figure 2, le noeud générateur 17 sélectionne des noeuds voisins 14, 16 se déplaçant vers le point d'ancrage $C_3$.

Si le noeud porteur ne possède aucun noeud voisin à cet instant, il garde le paquet d'agrégation qu'il porte en direction de la première intersection $I_1$ lors d'une étape de portage E623, tant qu'il ne trouve pas de noeud voisin auquel il peut transmettre le paquet CDP. On notera que le paquet d'agrégation CDP est toujours transféré à un noeud mobile se déplaçant en direction de l'intersection source $I_1$. De cette manière, on évite au paquet CDP de s'éloigner de l'intersection source $I_1$.

Si le noeud porteur possède des noeuds voisins se déplaçant en direction de la première intersection $I_1$ et localisés plus près du prochain point d'ancrage que le noeud porteur lui-même, il sélectionne lors d'une étape de sélection E624, le noeud voisin qui est situé le plus proche du prochain point d'ancrage.

Lors d'une étape de transmission E625, le noeud porteur transmet le paquet d'agrégation CDP au noeud voisin sélectionné lors de l'étape de sélection E624.

Si le paquet est reçu par un noeud principal (étape de test E626 positive), la sous-étape de transmission E62 se termine (étape finale E628) et le procédé se poursuit avec l'exécution de l'étape d'écriture E64 décrite en référence à la figure 4. Dans le cas contraire (étape de test E626 négative), le noeud porteur réitère les étapes décrites précédemment.

Dans l'exemple de la figure 2, le paquet d'agrégation CDP est transmis, dans un premier temps, du noeud générateur 17 au prochain point d'ancrage $C_3$ (point d'ancrage le plus proche du noeud porteur du paquet CDP).

Pour cela, le noeud générateur (porteur) 17 sélectionne à partir de sa table de voisinage, lors de l'étape de sélection E621, les noeuds voisins 14 et 16 se déplaçant en direction de l'intersection source $I_1$. Etant donné que le noeud porteur 17 possède au moins un voisin, il sélectionne, lors de l'étape de sélection E624, le noeud voisin 14 qui est le plus proche du prochain point d'ancrage $C_3$. A cet instant, le paquet CDP ne contient aucune information de densité de trafic. Etant donné que ce noeud voisin 14 est le noeud principal 14 de la cellule de couverture $X_3$ (étape de test E626 positive), la sous-étape de transmission E62 se termine (étape 628) et le noeud principal 14 insère dans le paquet CDP, lors de l'étape d'écriture E64, le nombre de ses noeuds voisins $N_3$ correspondant au nombre de noeuds situés dans la cellule $X_3$.

Dans un deuxième temps, le noeud principal 14 porteur du paquet CDP, transmet celui-ci au point d'ancrage suivant $C_2$, lors de la sous-étape de transmission E62. Pour cela, le noeud principal (porteur) 14 sélectionne son noeud voisin 10 se déplaçant en direction de l'intersection source $I_1$ (étape E621) et le plus proche du point d'ancrage $C_2$ (étape E624) et lui transmet (étape E625) le paquet CDP.

Dès réception du paquet CDP, le noeud mobile 10 sélectionne comme décrit précédemment, un noeud voisin se déplaçant vers l'intersection source $I_1$ (étape E621) et le plus proche du point d'ancrage $C_2$ (étape E624) auquel il transmet instantanément le paquet CDP (étape E625). Dans cet exemple, il s'agit du noeud principal 6 de la cellule $X_2$. On notera que parmi les deux noeuds principaux 6, 8 de la cellule $X_2$, le noeud principal 6 est sélectionné étant donné qu'il se déplace en direction de l'intersection source $I_1$. Lors de l'étape d'écriture E64, le noeud principal 6 de la cellule $X_2$ insère dans le paquet CDP, le nombre de ses noeuds voisins correspondant au nombre de noeuds $N_2$ à l'intérieur de la cellule $X_2$. Le paquet CDP contient à cet instant les informations de densité de trafic $N_1$ et $N_2$ relatives aux cellules $X_1$ et $X_2$.

Dans un troisième temps, le noeud principal 6 de la cellule $X_2$ transmet le paquet CDP lors de la sous-étape de transmission E62, au noeud mobile 4 appartenant à la cellule $X_1$ qui le transmet instantanément sans modification au noeud principal 1 de la cellule $C_1$. Pour cela, le noeud principal 6 de la cellule $X_2$ sélectionne le noeud voisin 4 se déplaçant vers l'intersection source $I_1$ (étape E621) et situé le plus proche du point d'ancrage suivant C1 (étape E624), puis lui transmet le paquet CDP (étape E625). Etant donné que le paquet CDP a été reçu par un noeud principal (étape de test E626 positive), l'étape de transmission E62 est terminée (étape E628).

Lors de l'étape d'écriture E64, le noeud principal 1 inscrit dans le paquet CDP le nombre de ses noeuds voisins obtenu à partir de sa table de voisinage, ce nombre correspondant au nombre de noeuds $N_1$ se trouvant dans la cellule de couverture $X_1$. A ce stade, le paquet d'agrégation CDP comprend le nombre de noeuds $N_1$, $N_2$, $N_3$ de chaque cellule $C_1$, $C_2$, $C_3$.

Etant donné que le paquet CDP a été reçu par le noeud principal 1 de la cellule adjacente à l'intersection source $I_1$ (étape de test E66 positive), le paquet d'agrégation CDP est transmis à l'intersection source $I_1$. Pour cela, le noeud principal 1 localisé dans la zone centrale $Z_1$ de la cellule $X_1$, utilise les coordonnées de l'intersection source $I_1$ préalablement enregistrées par le noeud générateur 17 dans le paquet CDP. Le paquet CDP est reçu par un noeud mobile 18 situé au niveau de l'intersection source $I_1$ et dans le domaine de portée de transmission du noeud principal 1 (sous-étape finale E70).

Une deuxième phase du procédé selon l'invention va maintenant être décrite en référence aux figures 6, 7 et 8, lors de laquelle des messages de signalisation RDP dénommés « Road Density Packet » sont générés et diffusés à travers le réseau de manière à signaler aux noeuds du réseau les voies de circulation qui présentent une densité de noeuds élevée. Ces messages de signalisation RDP sont utilisés pour informer des conditions de densité de trafic sur certaines voies de circulation du réseau routier.

La figure 6 représente de manière schématique l'intersection source $I_1$ précédente formée par le croisement de la voie de circulation X avec une autre voie de circulation Y reliant l'intersection source $I_1$ à une autre intersection destination $I_3$. La voie de circulation Y a été découpée, lors de l'étape de découpage E0 (ou E'0), en deux cellules de couverture $Y_1$ et $Y_2$ où circulent une pluralité de noeuds mobiles 19-26.

La deuxième phase lors de laquelle le paquet de signalisation RDP est diffusé va être maintenant décrite en détails en référence aux figures 6 et 7.

Lors d'une étape initiale E14, un noeud localisé au niveau de l'intersection source $I_1$ est sur le point d'entrer sur l'autre voie de circulation Y.

Dans le cas où il a reçu un paquet d'agrégation CDP (étape E16), il génère à partir de ce paquet d'agrégation CDP un paquet de signalisation RDP, lors d'une étape de génération E18. C'est précisément le cas du noeud 18 qui a reçu le paquet d'agrégation CDP émis par le noeud principal 1 sur la voie de circulation $X_1$, comme illustré sur la figure 6.

Le paquet de signalisation RDP est généré uniquement si la densité de trafic sur la voie de circulation d'où il provient est supérieure à un seuil $\delta$ de référence prédéterminé. Dans cet exemple, le noeud mobile 18 ne reçoit qu'un seul paquet CDP. Toutefois, en pratique, le noeud mobile 18 est susceptible de recevoir un paquet CDP en provenance de chaque voie de circulation sur laquelle il est susceptible de s'engager.

En considérant uniquement les voies de circulation présentant une densité de noeuds mobiles supérieure au seuil prédéterminé $\delta$, on minimise le flux de paquets de signalisation RDP émis par des noeuds mobiles au niveau de chaque intersection, évitant ainsi de surcharger la bande passante du réseau.

A partir des messages de signalisation RDP qu"il génère ou qu'il reçoit au niveau d'une intersection, chaque noeud mobile maintient à jour une base de données de trafic TIB («Trafic Information Base ») comprenant une liste des voies de circulation à forte densité de noeuds.

Dans cette base de données de trafic TIB, sont stockés les identifiants des voies de circulation dont la densité de noeuds mobiles est supérieure à la valeur de seuil $\delta$, en association avec leur densité de noeuds mobiles obtenue par analyse du paquet d'agrégation CDP. Un paramètre temporel permettant de dater les données de densité de trafic pour chaque voie de circulation identifiée dans la base de données de trafic TIB est également enregistré, de sorte que chaque noeud ne conserve pas des données de trafic périmées qui ne soient plus valides. Par la suite, on dira qu'une voie de circulation est encombrée, lorsque sa densité de trafic est supérieure à la valeur seuil $\delta$ prédéterminée.

De plus, le fait de répertorier uniquement les voies de circulation encombrées, permet de réduire considérablement la taille des bases de données de trafic TIB stockées au niveau de chaque noeud.

Supposons que la voie de circulation X est encombrée. Dans ce cas, le noeud mobile 18 au niveau de l'intersection source $I_1$, génère un paquet de signalisation RDP, lors de l'étape de génération E18, ce paquet étant stocké dans sa base de données de trafic TIB.

Lors d'une étape de transfert E20, le noeud 18 envoie le paquet de signalisation RDP sur l'autre voie de circulation Y, pour avertir les noeuds mobiles 20, 23, 24, 27 se déplaçant sur cette autre voie de circulation Y en direction de l'intersection source $I_1$, que la voie de circulation X est encombrée. Lors de cette étape de transfert E20, le paquet de signalisation RDP est transmis le long de la voie de circulation Y de cellule en cellule, de l'intersection source $I_1$ jusqu'à l'autre intersection destination $I_3$. La transmission du paquet de signalisation RDP se termine lorsqu'il est reçu par au moins un noeud situé au niveau de l'autre intersection $I_3$, lors d'une étape finale E22.

Le tableau 2 décrit à titre d'exemple et de manière générale le format d'un paquet de signalisation RDP généré après l'analyse d'un paquet CDP par un noeud mobile situé au niveau d'une intersection.

Tableau 2. Format d'un paquet d'agrégation RDP.

| Road Data Packet (RDP) | | |
|---|---|---|
| Chemin | | |
| Identifiant de la voie de circulation: X | Instant de transmission : $t_2$ | TTL |

Cette analyse consiste à calculer au moins un paramètre de caractérisation de la densité de trafic sur la voie de circulation choisi parmi :

- la densité locale de noeuds mobiles ;
- la densité moyenne de noeuds mobiles ;

- la variance de la densité locale de noeuds mobiles.

A titre d'exemple, la densité locale de noeuds mobiles sur la voie de circulation X est caractérisée par la séquence H suivante :

$$H = \left\{ X_1 : \frac{N_1}{\pi.R^2} ; X_2 : \frac{N_2}{\pi.R^2} X_1 : \frac{N_3}{\pi.R^2} \right\}$$

et la densité moyenne de noeuds mobiles sur la voie de circulation X est égale à $N = \frac{1}{3} \frac{(N_1 + N_2 + N_3)}{\pi.R^2}$.

Lors de l'étape de génération E18, le noeud mobile 18 génère le paquet d'agrégation RDP, où il insère :

- dans un champ « Identification de la voie de circulation », l'identifiant X de la voie de circulation X dont la densité de trafic N est supérieure à la valeur de seuil de référence $\delta$ (cas où $N > \delta$) ;
- dans un champ « Instant de transmission », l'instant $t_2$ correspondant à la date de génération du paquet RDP ou au temps de transmission du paquet RDP étant donné qu'il est envoyé dès qu'il est généré; et
- dans un champ « TTL (Time To Live) », le nombre TTL d'intersection que le paquet RDP doit traverser avant d'être ignoré.

Dans le cas où $N>\delta$, il est possible d'identifier à partir de la séquence H la cellule qui présente la plus forte densité de trafic (ou le nombre de noeuds le plus élevé). Cette identification est particulièrement avantageuse pour localiser un embouteillage à l'intérieur d'une voie de circulation.

Par exemple, TTL = 3 signifie que le paquet de signalisation RDP ne sera pas transmis au-delà de trois intersections successives. A chaque passage au niveau d'une intersection, TTL est décrémenté de 1. Lorsque TTL = 0, le paquet RDP est ignoré et n'est donc plus relayé.

Ainsi, chaque paquet de signalisation RDP est transmis sur une zone limitée à trois intersections. De cette manière, on évite de fournir des informations de densité de trafic qui ne seraient plus valides au moment de leur réception. L'utilisation du paramètre TTL permet donc de limiter le nombre de paquets émis à travers le réseau et d'éviter ainsi des problèmes de saturation de bande passante dans le cas où le réseau est dense.

On notera que le paquet RDP généré par un noeud mobile situé au niveau d'une intersection est transmis lors de l'étape de transfert E20 au moment où il quitte l'intersection et entre sur une voie de circulation. Dans l'exemple de la figure 2, le paquet de signalisation RDP est émis au moment où le noeud 18 quitte intersection source $I_1$ et entre sur l'autre voie de circulation Y. En portant le paquet de signalisation RDP jusqu'à l'entrée de la voie de circulation Y, le noeud évite de transmettre le paquet RDP à un noeud dont le déplacement est difficilement prévisible étant donné qu'il se trouve au niveau d'une intersection.

L'étape de transfert E20 va maintenant être décrite de manière détaillée en référence aux figures 6 et 8.

Lors d'une sous-étape initiale E200, lorsque le noeud 18 (noeud générateur et porteur du paquet de signalisation) entre sur la voie de circulation Y, il insère dans un champ « Chemin » du paquet de signalisation RDP, une séquence de coordonnées définissant un chemin à parcourir par le paquet de signalisation RDP lors de l'étape de transfert E20. Cette séquence comprend les coordonnées des points d'ancrage $C'_2$, $C'_1$ associés à cette voie de circulation Y et les coordonnées S' de l'autre intersection destination $I_3$ à atteindre. Les points d'ancrage $C'_1$, $C'_2$ correspondant au centre des cellules de couvertures $Y_1$, $Y_2$ respectives, sont déterminés lors de l'étape de découpage E0 ou E'0 décrite précédemment.

Lors d'une sous-étape de transmission E202, le paquet de signalisation RDP est transmis vers le point d'ancrage $C'_2$ associé à la cellule de couverture $Y_2$. Cette sous-étape de transmission E202 est réalisée de la même manière que la sous-étape de transmission E62 décrite précédemment en référence à la figure 5, dans le cadre de la transmission d'un paquet d'agrégation CDP.

Lors d'une sous-étape de diffusion E204, le noeud principal 21 ayant reçu le paquet de signalisation RDP, le diffuse à ses noeuds voisins 19, 20, 22, 23, autrement dit au groupe de noeuds mobiles associés à la cellule de couverture $Y_2$.

Les sous-étapes de transmission E202 et de diffusion E204 sont réitérées pour transmettre le paquet de signalisation RDP de cellule en cellule tant qu'il n'a pas atteint l'autre intersection destination $I_3$.

Dès que le paquet de signalisation RDP atteint la cellule Y1, adjacente à l'autre intersection destination $I_3$ (étape de test E206 positive), l'étape de transfert E20 se termine (sous-étape finale E208).

Dans l'exemple de la figure 6, après avoir diffusé (étape E204) le paquet de signalisation RDP à travers la

cellule de couverture $Y_2$, le noeud principal 21 de la cellule $Y_2$ le transmet vers le point d'ancrage $C'_1$ associé à la cellule $Y_1$. Le paquet RDP est reçu par le noeud mobile 25 se déplaçant vers l'autre intersection destination $I_3$ et se trouvant le plus près du point d'ancrage $C'_2$. Le noeud mobile 25 étant un noeud principal de la cellule $Y_1$, celui-ci diffuse (étape E204) le paquet de signalisation RDP à ses noeuds voisins 22, 23, 24, 27, puis transmet le paquet RDP à un noeud 31 situé au niveau de l'autre intersection destination $I_3$.

On notera que le routage des paquets d'agrégation CDP et de signalisation RDP s'effectue selon une stratégie de relais dite « Greedy Forwarding », qui consiste à relayer le paquet successivement de noeud en noeud, le long du chemin prédéfini par les points d'ancrage. Selon cette stratégie de relais, un noeud porteur d'un paquet cherche toujours à relayer ce paquet à un noeud voisin cible qui se trouve plus proche du point d'ancrage. Dès réception du paquet, le noeud voisin cible devient à son tour un noeud porteur qui cherche à son tour à relayer le paquet à un noeud voisin et ainsi de suite.

Applications industrielles

Un premier exemple d'application du procédé selon l'invention va être maintenant décrit en référence à la figure 9. Cet exemple concerne le routage de paquets de données dans un réseau ad-hoc véhiculaire comprenant une pluralité de noeuds mobiles 50, 60, où chaque noeud mobile est un terminal mobile selon l'invention embarqué dans véhicule se déplaçant selon des voies de circulation formant entre elles une pluralités d'intersections J, $J_1$-$J_8$. Dans cet exemple, le procédé selon l'invention est mis en oeuvre dans un protocole de routage pour la transmission de paquets de données entre des noeuds du réseau.

En prenant en compte les informations de densité de trafic fournies dans les paquets d'agrégation CDP, des chemins de routage des paquets de données peuvent être calculés en temps réel grâce à l'identification de voies de circulation à forte densité de noeuds qui constituent des axes de transmission à très forte connectivité. Ces axes de transmission constituent des axes privilégiés à travers lesquels les paquets de données peuvent transiter de manière optimale (idéal pour la transmission de flux de données nécessitant une forte qualité de services).

Dans cet exemple, nous considérons qu'à un instant donné, un véhicule source 50 localisé au niveau d'une intersection courante J porte un paquet de données P qu'il souhaite transmettre à un véhicule destination 60 localisé à cet instant à proximité d'une intersection $J_7$. Pour cela, le véhicule source 50 sélectionne une intersection intermédiaire $J_1$ ou $J_2$ ou $J_3$ consécutive à l'intersection courante J, vers laquelle il va transmettre le paquet de données P. Cette sélection prend en compte la distance curviligne du chemin $U_1$, $U_2$, $U_3$, à parcourir de l'intersection intermédiaire jusqu'au véhicule destination 60 et la densité de trafic de noeuds mobiles sur la voie de circulation reliant l'intersection courante J à l'intersection intermédiaire $J_1$, $J_2$, $J_3$ respective.

Etant situé au niveau de l'intersection courante J, le véhicule source 50 reçoit des paquets d'agrégation CDP en provenances des voies de circulation adjacentes reliant les intersections J et $J_1$ ; J et $J_2$ ; J et $J_3$, conformément au procédé selon l'invention. Après analyse du contenu des différents paquets d'agrégation CDP, le véhicule source 50 détermine la densité de trafic sur les voies de circulation associées et sélectionne l'intersection intermédiaire qui se trouve la plus proche du véhicule destination 60 et qui présente le plus- fort taux de connectivité avec l'intersection courante J.

Dans l'exemple de la figure 9, le véhicule source 50 sélectionne l'intersection $J_2$ étant donné que le chemin $U_2$ reliant l'intersection, intermédiaire $J_2$ au véhicule destination 60 est minimal et que la densité de trafic sur la voie de circulation reliant l'intersection courante J à l'intersection intermédiaire $J_2$ est optimale. En effet, la longueur du chemin $U_2$ est inférieure à celle des chemins $U_1$ et $U_3$ permettant d'atteindre le véhicule destination 60 à partir des intersections intermédiaires $J_1$ et $J_3$ respectivement. La densité de noeuds mobiles sur la voie reliant l'intersection courante J à l'intersection intermédiaire $J_2$ est supérieure aux densités de trafic de noeuds mobiles sur les voies de circulation reliant les intersections J-$J_1$ et J-$J_3$.

Dans le cadre de cet exemple d'application, on notera que les paquets de signalisation RDP ne sont pas nécessaires, étant donné qu'au niveau d'une intersection courante, les seules informations de trafic nécessaires sont les densités de noeuds mobiles sur les voies de circulation adjacentes à l'intersection courante. En effet, le véhicule source porteur 50 du paquet de données P à transmettre sélectionne une intersection intermédiaire à partir des densités de trafic local fournies par les paquets d'agrégation CDP des voies de circulations adjacentes.

Un deuxième exemple d'application du procédé selon l'invention va être maintenant décrit en référence à la figure 10. Cet exemple d'application concerne un système de détection et de signalisation d'embouteillages en temps réel pour améliorer la navigation dans un réseau inter-véhiculaire.

Le procédé selon l'invention est mis en oeuvre par un système de navigation embarqué au niveau de chaque noeud du réseau, pour identifier des voies de circulation encombrées grâce aux paquets d'agrégation CDP et en avertir les noeuds du réseau en temps réel grâce aux paquets de signalisation RDP conformément à l'invention. En fonction des informations de densité de trafic disséminées à travers le réseau grâce à ces paquets, le système de navigation embarqué d'un noeud pourra à chaque instant définir un itinéraire adapté, en évitant les voies de circulation encombrées.

Le réseau routier de la figure 10 comprend huit intersections $J_1$-$J_8$ formées par le croisement d'une pluralité de voies de circulation sur lesquelles circulent des noeuds mobiles (véhicules équipés d'un terminal mobile selon l'invention).

On suppose qu'un véhicule 40 localisé au niveau d'une intersection de départ $J_1$ souhaite atteindre une intersection d'arrivée $J_8$. Grâce à la génération et à l'échange de paquets de signalisation RDP entre les différents noeuds du réseau conformément au procédé selon l'invention, le véhicule 40 est informé que les voies de circulation reliant les intersections $J_1$-$J_6$ ; $J_2$-$J_4$ ; $J_4$-$J_6$ ; $J_7$-$J_8$ sont encombrées. On suppose ici que le paramètre TTL=3, de sorte que tout paquet de signalisation RDP traverse au plus trois intersections avant d'être abandonné. Ainsi, le véhicule 40 peut recevoir des paquets de signalisation RDP ayant été émis au niveau des intersections $J_7$, $J_6$, $J_5$, $J_4$. Ainsi, le paramètre TTL=3 permet de limiter la diffusion des paquets de signalisation RDP à une zone limitée par un nombre prédéterminé d'intersections à parcourir.

En tenant compte de ces informations, le système de navigation du véhicule 40 calcule un itinéraire évitant les voies de circulation encombrées. Dans cet exemple, le véhicule 40 ne reçoit aucun message de signalisation RDP en provenance des voies de circulation reliant les intersections $J_1$-$J_2$ ; $J_2$-$J_3$, $J_3$-$J_5$, $J_5$-$J_8$, étant donné que la densité de trafic sur ces voies de circulation est inférieure à la valeur de seuil prédéterminée $\delta$. Par conséquent, ces voies de circulation sont considérées non encombrées et peuvent être prises en compte par le système de navigation pour établir l'itinéraire, du véhicule. 40. Dans cet exemple, l'itinéraire calculé passe donc par les intersections suivantes $J_1$-$J_2$-$J_3$-$J_5$-$J_8$.

Dans les deux exemples d'application décrits ci-dessus, la densité des noeuds mobile sur chaque voie de circulation est estimée en temps réel conformément au procédé selon l'invention, de manière à identifier les voies de circulation qui présente ont une, forte densité de trafic de noeuds.

On notera que dans le premier exemple d'application, les voies de circulation à forte densité de trafic sont recherchées de manière à faire transiter les paquets de données de manière optimale, alors que dans le deuxième exemple d'application, ces voies sont évitées de manière à optimiser le temps de parcours du véhicule.

Le procédé selon l'invention est particulièrement bien adapté aux réseaux inter-véhiculaires dans des environnements urbains denses, mais pourra être appliqué à d'autres types de réseau ad-hoc mobiles qui nécessitent l'estimation et la signalisation de densité de trafic en temps réel.

**Revendications**

1. Procédé d'estimation de la densité de noeuds mobiles d'un réseau ad-hoc dans lequel des noeuds mobiles (1-18 ; 19-31 ; 40, 50, 60, D) se déplacent selon des voies de circulation (X, Y) d'un réseau géographique déterminé, au moins certains noeuds mobiles étant aptes à se localiser dans le réseau géographique et adaptés à maintenir à jour une table de voisinage comprenant des informations relatives à la position de leurs noeuds voisins,
ledit procédé étant tel que la densité de noeuds mobiles sur une voie de circulation (X ; Y) est déterminée selon les étapes suivantes:

   - ladite voie de circulation (X ; Y) étant découpée en une pluralité de cellules de couverture ($X_1$, $X_2$, $X_3$; $X_1$, $X_2$, $X_3$, $X_4$ ; $Y_1$, $Y_2$), une étape de dénombrement intracellulaire (E5) mise en oeuvre au niveau d'une desdites cellules de couverture, lorsque un noeud mobile est localisé dans une zone centrale ($Z_1$, $Z_2$, $Z_3$) prédéterminée de ladite cellule de couverture ($X_1$, $X_2$, $X_3$), ledit noeud étant dit « noeud principal » (1, 6, 14), et déterminant, à partir de sa table de voisinage, des données de densité de trafic local; et
   - une étape d'agrégation (E6), au cours de laquelle ledit noeud principal insère dans un paquet d'agrégation (CDP), lesdites données de densité de trafic local déterminées.

2. Procédé selon la revendication 1, **caractérisé en ce que**, lors de ladite étape d'agrégation (E6), ledit noeud principal insère dans ledit paquet d'agrégation (CDP) le nombre ($N_1$, $N_2$, $N_3$) de noeuds mobiles de la cellule à laquelle il appartient et transmet ledit paquet d'agrégation (CDP) à un noeud principal d'une cellule de couverture voisine.

3. Procédé selon la revendication 2, **caractérisé en ce que**, lesdites voies de circulation formant entre elles une pluralité d'intersections ($I_1$; $I_2$; $I_3$; J, $J_1$-$J_8$) :

   - le paquet d'agrégation (CDP) est généré par un noeud mobile dit noeud générateur (17) ayant parcouru l'intégralité de la voie de circulation (X) reliant une intersection source ($I_1$) à une intersection destination ($I_2$) et se trouvant à proximité de l'intersection destination ($I_2$) ; et **en ce que**
   - le paquet d'agrégation (CDP) est transmis de cellule en cellule, depuis la cellule adjacente à l'intersection de destination ($I_2$) jusqu'à l'intersection source ($I_1$).

4. Procédé selon la revendication 3, **caractérisé en ce que** le noeud générateur (17) est un noeud mobile ayant préalablement modifié un paquet d'agrégation (CDP) en tant que noeud principal.

5. Procédé selon la revendication 1, **caractérisé en ce que** lesdites cellules de couverture ($X_1$, $X_2$, $X_3$ ; $Y_1$, $Y_2$) sont préalablement définies sur une carte numérique représentative du réseau géographique en association avec des points d'ancrage ($C_1$, $C_2$, $C_3$ ; $C'_1$, $C'_2$) situés au centre desdites cellules et dont les coordonnées sont mémorisées ; et **en ce que** lors de l'étape d'agrégation (E6), le paquet d'agrégation (CDP) est transmis de cellule en cellule, suivant les points d'ancrage ($C_1$, $C_2$, $C_3$ ; $C'_1$, $C'_2$) définis sur la carte représentative du réseau géographique.

6. Procédé selon l'une quelconque des revendications 3 et 4, **caractérisé en ce que** le noeud générateur (17) calcule les coordonnées géographiques de points d'ancrage ($C_1$, $C_2$, $C_3$ ; $C'_1$, $C'_2$) correspondant au centre desdites cellules à partir d'un paramètre de longueur (L) de la voie de circulation (X) et d'un paramètre de portée de transmission d'un noeud mobile ; et **en ce que** lors de l'étape d'agrégation (E6), le paquet d'agrégation (CDP) est transmis de cellule en cellule suivant les points d'ancrage ($C_1$, $C_2$, $C_3$ ; $C'_1$, $C'_2$) calculés par ledit noeud générateur.

7. Procédé selon l'une quelconque des revendications 5 à 6, **caractérisé en ce qu'**il comprend en outre une étape d'analyse des données de trafic contenues dans le paquet d'agrégation (CDP) reçu au niveau d'une intersection ($I_1$), l'analyse consistant à calculer au moins un paramètre de caractérisation de la densité de trafic sur la voie de circulation choisi parmi :

   - la densité locale de noeuds mobiles ;
   - la densité moyenne de noeuds mobiles ;
   - la variance de la densité locale de noeuds mobiles.

8. Procédé selon l'une quelconque des revendications 2 à 7, **caractérisé en ce que**, ledit procédé comprend en outre une phase de signalisation comprenant :

   - une étape de génération (E18), lors de laquelle un noeud mobile situé au niveau d'une intersection ($I_1$) génère un paquet de signalisation (RDP) à partir d'un paquet d'agrégation (CDP) relatif à une voie de circulation (X) lorsque la densité de trafic sur ladite voie de circulation (X) est supérieure à un seuil prédéterminé ($\delta$) ; et
   - une étape de transmission (E20) du paquet de signalisation (RDP) aux noeuds principaux (21 ; 25) desdites cellules ($Y_1$ ; $Y_2$), un noeud principal (21 ; 25) diffusant le paquet de signalisation (RDP) à ses noeuds voisins.

9. Procédé selon la revendication 8, **caractérisé en ce que** le paquet de signalisation (RDP) est transmis de cellule en cellule, dans une zone limitée par un nombre (TTL) prédéterminé d'intersections à parcourir.

10. Procédé de routage de paquets de données dans un réseau ad-hoc comprenant une pluralité de noeuds mobiles se déplaçant selon des voies de circulation d'un réseau géographique déterminé,
ledit procédé comprenant une étape d'établissement d'un chemin de routage à travers au moins une partie des noeuds mobiles pour la transmission des paquets, ledit chemin de routage étant établi en fonction des densités de noeuds mobiles sur les voies de circulation, déterminées selon le procédé d'estimation de l'une quelconque des revendications 1 à 9.

11. Terminal de communication sans fil destiné à former un noeud mobile d'un réseau ad-hoc comprenant une pluralité de noeuds mobiles se déplaçant selon des voies de circulation d'un réseau géographique déterminé, ledit terminal comprenant des moyens aptes à déterminer la localisation dudit terminal dans le réseau géographique et des moyens pour maintenir à jour une table de voisinage comprenant des informations relatives à la position de ses noeuds voisins,
ledit terminal étant tel qu'il comprend en outre :

   - des moyens de dénombrement intracellulaire, pour déterminer à partir de sa table de voisinage, des données de densité de trafic local au niveau d'une cellule de couverture ($X_1$, $X_2$, $X_3$ ; $Y_1$, $Y_2$) d'une voie de circulation (X ; Y) découpée en une pluralité de cellules de couverture,

lesdits moyens de dénombrement intracellulaire étant mis en oeuvre lorsque le terminal est localisé dans une zone centrale ($Z_1$, $Z_2$, $Z_3$) prédéterminée de ladite cellule de couverture ($X_1$, $X_2$, $X_3$) ;

   - des moyens d'écriture pour insérer lesdites données de densité de trafic local dans un paquet d'agrégation ; et

- des moyens de réception et de transmission dudit paquet d'agrégation (CDP).

**12.** Programme d'ordinateur comprenant des instructions pour l'exécution de toutes les étapes du procédé selon la revendication 1, lorsque ledit programme est exécuté par un ordinateur.

**13.** Support d'enregistrement lisible par un ordinateur sur lequel est enregistré un programme informatique selon la revendication 12.

## Claims

**1.** Method for estimating the density of mobile nodes of an ad-hoc network in which mobile nodes (1-18; 19-31; 40, 50, 60, D) are moving on road lanes (X, Y) of a determined geographic network, at least some mobile nodes being able to be located in the geographic network and designed to maintain a neighbourhood table including information relating to the position of their neighbouring nodes up-to-date,
said method being such that the density of mobile nodes on a road lane (X; Y) is determined according to the following steps:

- said road lane (X; Y) being divided up into a plurality of coverage cells ($X_1$, $X_2$, $X_3$; $X_1$, $X_2$, $X_3$, $X_4$; $Y_1$, $Y_2$), an intracellular counting step (E5) implemented at one of said coverage cells, when a mobile node is located in a predetermined central area ($Z_1$, $Z_2$, $Z_3$) of said coverage cell ($X_1$, $X_2$, $X_3$) , said node being called "main node" (1, 6, 14), and determining, from its neighbourhood table, local traffic density data; and
- an aggregation step (E6), during which said main node inserts said determined local traffic density data into an aggregation packet (CDP).

**2.** Method according to Claim 1, **characterized in that**, in said aggregation step (E6), said main node inserts into said aggregation packet (CDP) the number ($N_1$, $N_2$, $N_3$) of mobile nodes of the cell to which it belongs and transmits said aggregation packet (CDP) to a main node of a neighbouring coverage cell.

**3.** Method according to Claim 2, **characterized in that**, said road lanes forming between them a plurality of intersections ($I_1$; $I_2$; $I_3$; J, $J_1$-$J_8$) :

- the aggregation packet (CDP) is generated by a mobile node called generator node (17) having covered all the road lane (X) linking a source intersection ($I_1$) to a destination intersection ($I_2$) and being located in proximity to the destination intersection ($I_2$); and **in that**
- the aggregation packet (CDP) is transmitted from cell to cell, from the cell adjacent to the destination intersection ($I_2$) to the source intersection ($I_1$).

**4.** Method according to Claim 3, **characterized in that** the generator node (17) is a mobile node that has previously modified an aggregation packet (CDP) in its capacity as main node.

**5.** Method according to Claim 1, **characterized in that** said coverage cells ($X_1$, $X_2$, $X_3$; $Y_1$, $Y_2$) are previously defined on a digital map representative of the geographic network in association with anchor points ($C_1$, $C_2$, $C_3$; $C'_1$, $C'_2$) situated at the centre of said cells and whose coordinates are stored; and **in that**, in the aggregation step (E6), the aggregation packet (CDP) is transmitted from cell to cell, following the anchor points ($C_1$, $C_2$, $C_3$; $C'_1$, $C'_2$) defined on the map representative of the geographic network.

**6.** Method according to any one of Claims 3 and 4, **characterized in that** the generator node (17) computes the geographic coordinates of anchor points ($C_1$, $C_2$, $C_3$; $C'_1$, $C'_2$) corresponding to the centre of said cells from a length parameter (L) of the road lane (X) and a transmission range parameter of a mobile node; and **in that**, in the aggregation step (E6), the aggregation packet (CDP) is transmitted from cell to cell following the anchor points ($C_1$, $C_2$, $C_3$; $C'_1$, $C_2$) computed by said generator node.

**7.** Method according to any one of Claims 5 and 6, **characterized in that** it also comprises a step for analysing the traffic data contained in the aggregation packet (CDP) received at an intersection ($I_1$), the analysis consisting in computing at least one parameter characterizing the traffic density on the road lane, chosen from:

- the local density of mobile nodes;

- the average density of mobile nodes;
- the variance of the local density of mobile nodes.

**8.** Method according to any one of Claims 2 to 7, **characterized in that** said method also comprises a signalling phase comprising:

- a generation step (E18), in which a mobile node situated at an intersection ($I_1$) generates a signalling packet (RDP) from an aggregation packet (CDP) relating to a road lane (X) when the traffic density on said road lane (X) is greater than a predetermined threshold ($\delta$); and
- a transmission step (E20) for transmitting the signalling packet (RDP) to the main nodes (21; 25) of said cells ($Y_1$; $Y_2$), a main node (21; 25) broadcasting the signalling packet (RDP) to its neighbouring nodes.

**9.** Method according to Claim 8, **characterized in that** the signalling packet (RDP) is transmitted from cell to cell, in an area limited by a predetermined number (TTL) of intersections to be passed over.

**10.** Method for routing data packets in an ad-hoc network comprising a plurality of mobile nodes moving along road lanes of a determined geographic network, said method comprising a step for establishing a routing path through at least some of the mobile nodes for the transmission of the packets, said routing path being established according to mobile node densities on the road lanes, determined according to the estimation method of any one of Claims 1 to 9.

**11.** Wireless communication terminal intended to form a mobile node of an ad-hoc network comprising a plurality of mobile nodes moving along road lanes of a determined geographic network, said terminal comprising means suitable for determining the location of said terminal in the geographic network and means for maintaining a neighbourhood table including information relating to the position of its neighbouring nodes up-to-date,
said terminal being such that it also comprises:

- intracellular counting means, for determining, from its neighbourhood table, local traffic density data in a coverage cell ($X_1$, $X_2$, $X_3$; $Y_1$, $Y_2$) of a road lane (X; Y) divided up into a plurality of coverage cells, said intracellular counting means being implemented when the terminal is located in a predetermined central area ($Z_1$, $Z_2$, $Z_3$) of said coverage cell ($X_1$, $X_2$, $X_3$) ;
- writing means for inserting said local traffic density data into an aggregation packet; and
- means for receiving and transmitting said aggregation packet (CDP).

**12.** Computer program comprising instructions for executing all the steps of the method according to Claim 1, when said program is executed by a computer.

**13.** Computer-readable storage medium on which is stored a computer program according to Claim 12.

## Patentansprüche

**1.** Verfahren zum Abschätzen der Dichte von mobilen Knoten eines Ad-hoc-Netzes, in dem sich mobile Knoten (1-18; 19-31; 40, 50, 60, D) gemäß Verkehrsstraßen (X, Y) eines bestimmten geographischen Netzes verlagern, wobei zumindest bestimmte mobile Knoten im geographischen Netz lokalisiert werden können und dazu ausgelegt sind, eine Umgebungstabelle mit Informationen in Bezug auf die Position ihrer Nachbarknoten aktuell zu halten,
wobei das Verfahren derart ist, dass die Dichte von mobilen Knoten auf einer Verkehrsstraße (X; Y) gemäß den folgenden Schritten bestimmt wird:

- die Verkehrsstraße (X; Y) wird in mehrere Abdeckungszellen ($X_1$, $X_2$, $X_3$; $X_1$, $X_2$, $X_3$, $X_4$; $Y_1$, $Y_2$) aufgeteilt, wobei ein Schritt zum intrazellularen Zählen (E5) in Bezug auf eine der Abdeckungszellen ausgeführt wird, wenn ein mobiler Knoten in einer vorbestimmten zentralen Zone ($Z_1$, $Z_2$, $Z_3$) der Abdeckungszelle ($X_1$, $X_2$, $X_3$) lokalisiert wird, wobei der Knoten "Hauptknoten" (1, 6, 14) genannt wird und anhand seiner Umgebungstabelle Daten der Dichte des lokalen Verkehrs bestimmt; und
- einen Eingliederungsschritt (E6), in dessen Verlauf der Hauptknoten die bestimmten Daten der Dichte des lokalen Verkehrs in ein Eingliederungspaket (CDP) einfügt.

**2.** Verfahren nach Anspruch 1, **dadurch gekennzeichnet, dass** im Eingliederungsschritt (E6) der Hauptknoten in das Eingliederungspaket (CDP) die Anzahl ($N_1$, $N_2$, $N_3$) von mobilen Knoten der Zelle einfügt, zu der er gehört, und das Eingliederungspaket (CDP) zu einem Hauptknoten einer benachbarten Abdeckungszelle überträgt.

**3.** Verfahren nach Anspruch 2, **dadurch gekennzeichnet, dass**, wenn die Verkehrsstraßen miteinander mehrere Kreuzungen ($I_1$; $I_2$; $I_3$; J, $J_1$-$J_8$) bilden:

- das Eingliederungspaket (CDP) durch einen Erzeugungsknoten (17) genannten mobilen Knoten erzeugt wird, der die Gesamtheit der Verkehrsstraße (X) durchfahren hat, die eine Quellenkreuzung ($I_1$) mit einer Zielkreuzung ($I_2$) verbindet, und sich in der Nähe der Zielkreuzung ($I_2$) befindet; und dass
- das Eingliederungspaket (CDP) von Zelle zu Zelle von der zur Zielkreuzung ($I_2$) benachbarten Zelle bis zur Quellenkreuzung ($I_1$) übertragen wird.

**4.** Verfahren nach Anspruch 3, **dadurch gekennzeichnet, dass** der Erzeugungsknoten (17) ein mobiler Knoten ist, der vorher ein Eingliederungspaket (CDP) als Hauptknoten modifiziert hat.

**5.** Verfahren nach Anspruch 1, **dadurch gekennzeichnet, dass** die Abdeckungszellen ($X_1$, $X_2$, $X_3$; $Y_1$, $Y_2$) vorher auf einer digitalen Karte, die das geographische Netz darstellt, in Zusammenhang mit Verankerungspunkten ($C_1$, $C_2$, $C_3$; $C'_1$, $C'_2$) definiert werden, die im Zentrum der Zellen liegen und deren Koordinaten gespeichert sind; und dass im Eingliederungsschritt (E6) das Eingliederungspaket (CDP) von Zelle zu Zelle gemäß den Verankerungspunkten ($C_1$, $C_2$, $C_3$; $C'_1$, $C'_2$) übertragen wird, die auf der Karte definiert sind, die das geographische Netz darstellt.

**6.** Verfahren nach einem der Ansprüche 3 und 4, **dadurch gekennzeichnet, dass** der Erzeugungsknoten (17) die geographischen Koordinaten von Verankerungspunkten ($C_1$, $C_2$, $C_3$; $C'_1$, $C'_2$), die dem Zentrum der Zellen entsprechen, anhand eines Längenparameters (L) der Verkehrsstraße (X) und eines Parameters der Übertragungsreichweite eines mobilen Knotens berechnet; und dass im Eingliederungsschritt (E6) das Eingliederungspaket (CDP) von Zelle zu Zelle gemäß den durch den Erzeugungsknoten berechneten Verankerungspunkten ($C_1$, $C_2$, $C_3$; C'1, $C'_2$) übertragen wird.

**7.** Verfahren nach einem der Ansprüche 5 bis 6, **dadurch gekennzeichnet, dass** es außerdem einen Schritt zur Analyse der Verkehrsdaten, die im empfangenen Eingliederungspaket (CDP) enthalten sind, in Bezug auf eine Kreuzung ($I_1$) umfasst, wobei die Analyse darin besteht, mindestens einen Parameter zur Charakterisierung der Verkehrsdichte auf der Verkehrsstraße zu berechnen, der ausgewählt ist aus:

- der lokalen Dichte von mobilen Knoten;
- der mittleren Dichte von mobilen Knoten;
- der Varianz der lokalen Dichte von mobilen Knoten.

**8.** Verfahren nach einem der Ansprüche 2 bis 7, **dadurch gekennzeichnet, dass** das Verfahren außerdem eine Signalisierungsphase umfasst, die Folgendes umfasst:

- einen Erzeugungsschritt (E18), in dem ein mobiler Knoten, der sich auf der Höhe einer Kreuzung ($I_1$) befindet, ein Signalisierungspaket (RDP) anhand eines Eingliederungspakets (CDP) in Bezug auf eine Verkehrsstraße (X) erzeugt, wenn die Verkehrsdichte auf der Verkehrsstraße (X) höher ist als ein vorbestimmter Schwellenwert ($\delta$) ; und
- einen Schritt (E20) zur Übertragung des Signalisierungspakets (RDP) zu den Hauptknoten (21; 25) der Zellen ($Y_1$; $Y_2$) , wobei ein Hauptknoten (21; 25) das Signalisierungspaket (RDP) zu seinen Nachbarknoten sendet.

**9.** Verfahren nach Anspruch 8, **dadurch gekennzeichnet, dass** das Signalisierungspaket (RDP) von Zelle zu Zelle in einer durch eine vorbestimmte Anzahl (TTL) von zu durchfahrenden Kreuzungen begrenzten Zone übertragen wird.

**10.** Verfahren zum Leiten von Datenpaketen in einem Ad-hoc-Netz mit mehreren mobilen Knoten, die sich gemäß Verkehrsstraßen eines bestimmten geographischen Netzes verlagern,
wobei das Verfahren einen Schritt zum Festlegen eines Leitungsweges über mindestens einen Teil der mobilen Knoten für die Übertragung der Pakete umfasst, wobei der Leitungsweg in Abhängigkeit von den Dichten von mobilen Knoten auf den Verkehrsstraßen festgelegt wird, die gemäß dem Abschätzverfahren nach einem der Ansprüche 1 bis 9 bestimmt wurden.

**11.** Endgerät zur drahtlosen Kommunikation, das einen mobilen Knoten eines Ad-hoc-Netzes mit mehreren mobilen Knoten, die sich gemäß Verkehrsstraßen eines bestimmten geographischen Netzes verlagern, bilden soll, wobei das Endgerät Mittel, die den Ort des Endgeräts im geographischen Netz bestimmen können, und Mittel, um eine Umgebungstabelle mit Informationen in Bezug auf die Position seiner Nachbarknoten aktuell zu halten, umfasst, wobei das Endgerät derart ist, dass es außerdem Folgendes umfasst:

- Mittel zum intrazellularen Zählen, um anhand seiner Umgebungstabelle Daten der Dichte des lokalen Verkehrs in Bezug auf eine Abdeckungszelle ($X_1$, $X_2$, $X_3$; $Y_1$, $Y_2$) einer Verkehrsstraße (X; Y) zu bestimmen, die in mehrere Abdeckungszellen aufgeteilt ist,

wobei die Mittel zum intrazellularen Zählen eingesetzt werden, wenn das Endgerät in einer vorbestimmten zentralen Zone ($Z_1$, $Z_2$, $Z_3$) der Abdeckungszelle ($X_1$, $X_2$, $X_3$) lokalisiert wird;

- Mittel zum Schreiben, um die Daten der Dichte des lokalen Verkehrs in ein Eingliederungspaket einzufügen; und
- Mittel zum Empfangen und zum Senden des Eingliederungspakets (CDP).

**12.** Computerprogramm mit Befehlen zur Ausführung aller Schritte des Verfahrens nach Anspruch 1, wenn das Programm von einem Computer ausgeführt wird.

**13.** Durch einen Computer lesbarer Aufzeichnungsträger, auf dem ein Computerprogramm nach Anspruch 12 aufgezeichnet ist.

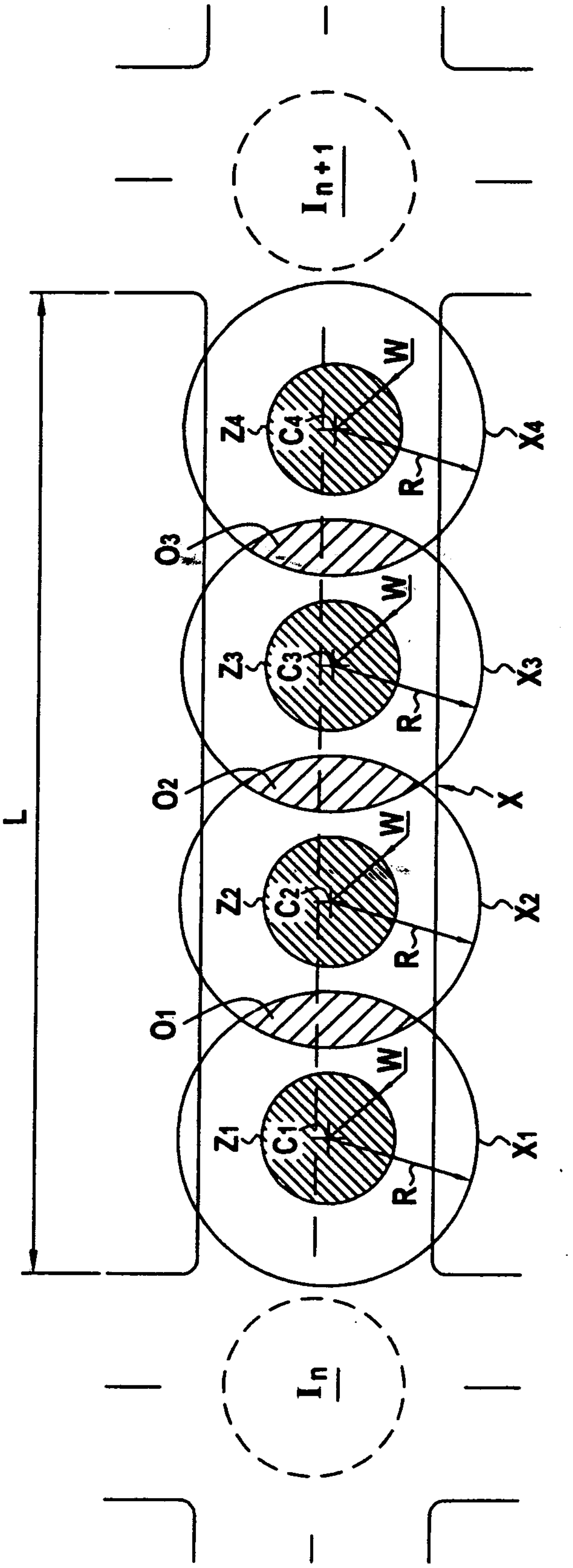


FIG.1

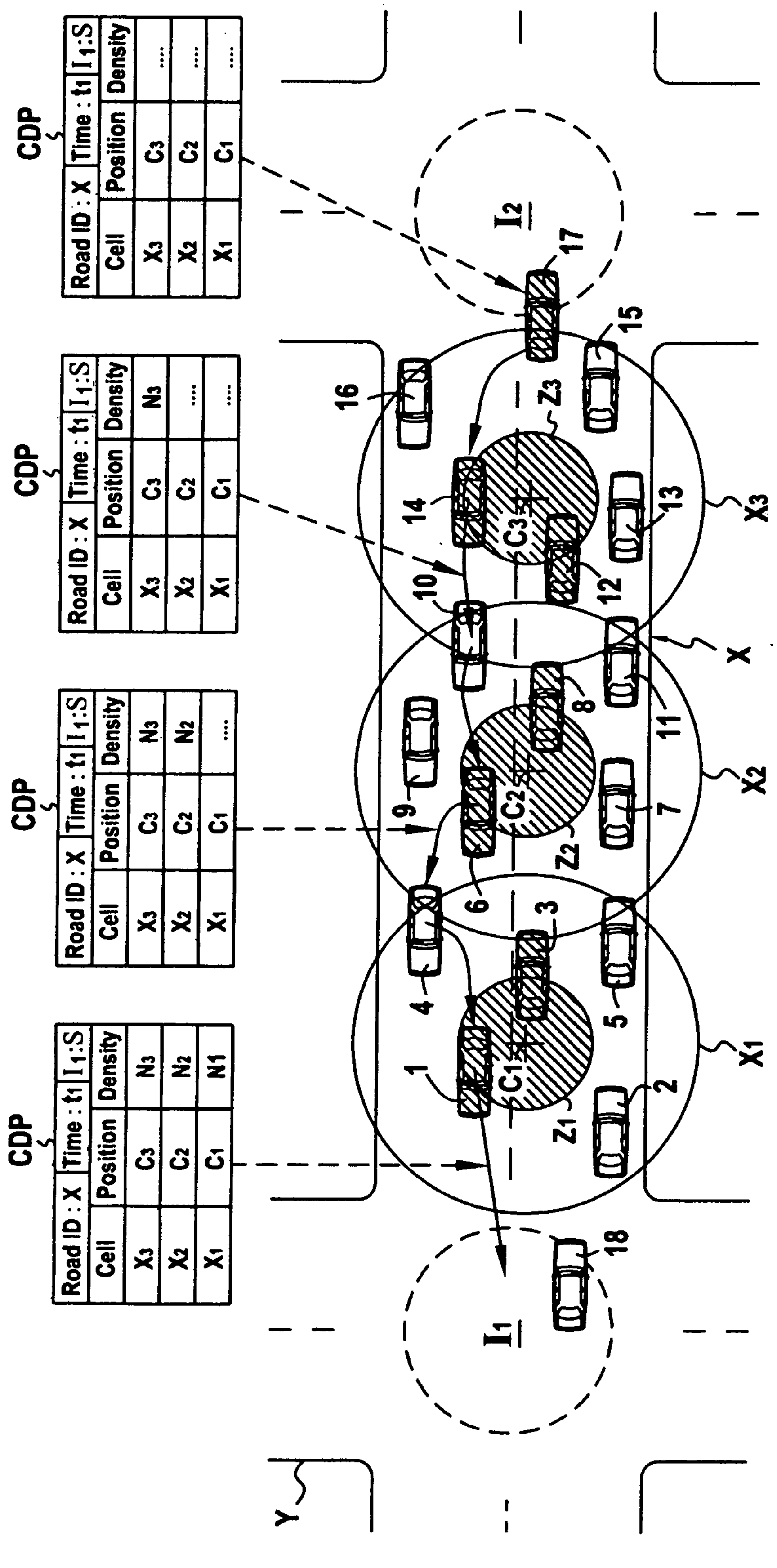
CDP
Road ID : X
Time : t1
I1:S
Cell
Position
Density
X3
X2
X1
C3
C2
C1
N3
N2
N1
I1
I2
Z1
Z2
Z3
X
Y
1
2
3
4
5
6
7
8
9
10
11
12
13
14
15
16
17
18

FIG.2

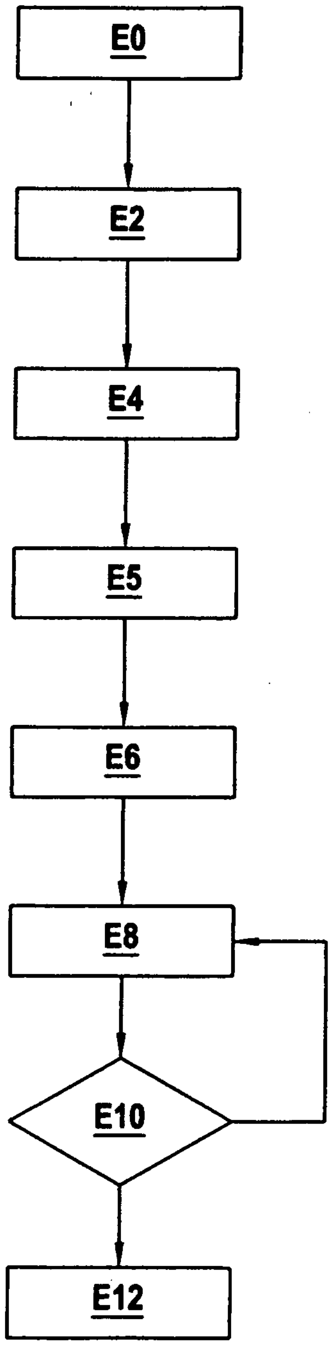


FIG.3A

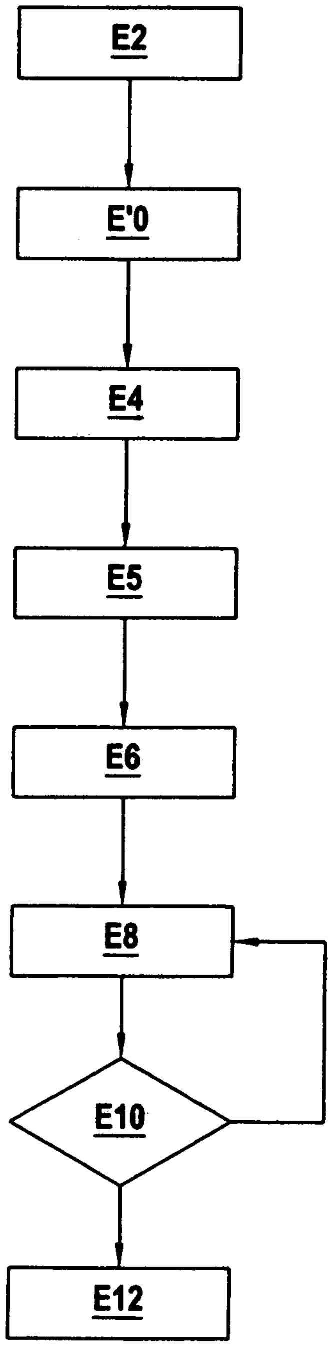


FIG.3B

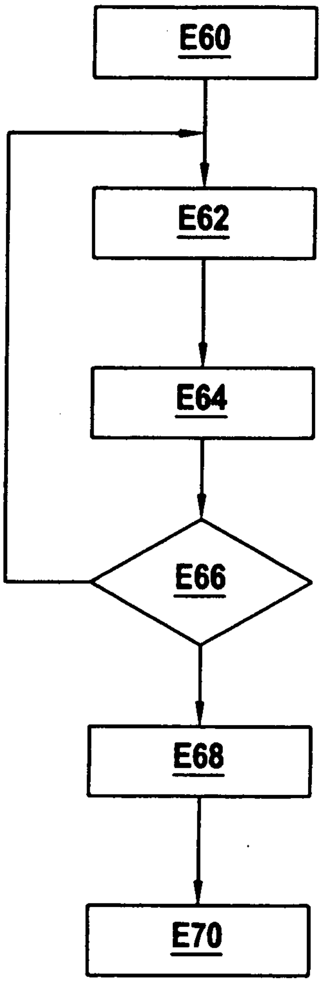
E60
E62
E64
E66
E68
E70

FIG.4

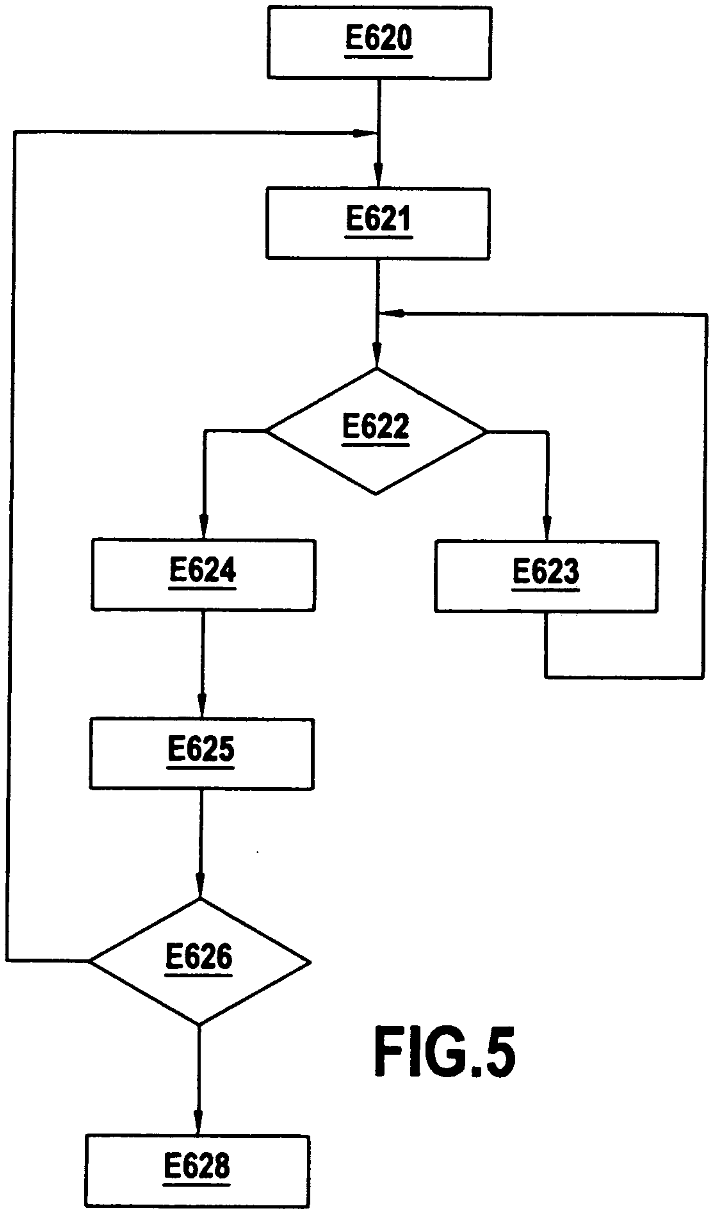
E620
E621
E622
E624
E623
E625
E626
E628

FIG.5

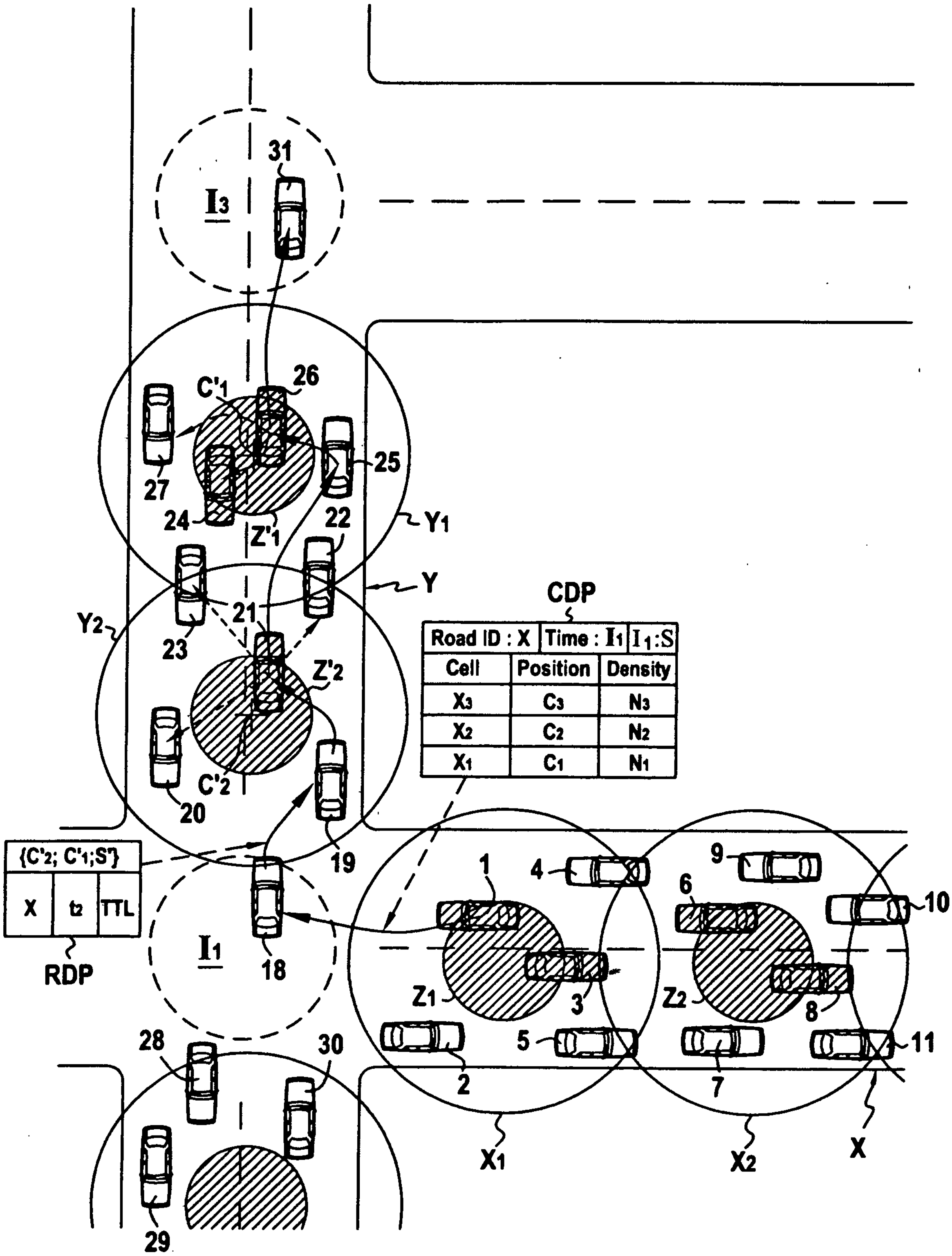
31
I3
26
C'1
25
27
24
Z'1
22
Y1
Y
21
CDP
Y2
23
Road ID : X
Time : I1
I1:S
Cell
Position
Density
X3
C3
N3
X2
C2
N2
X1
C1
N1
Z'2
C'2
20
19
{C'2; C'1;S'}
X
t2
TTL
RDP
I1
18
1
4
9
6
10
Z1
3
Z2
8
5
11
28
30
2
7
X1
X2
X
29

FIG.6

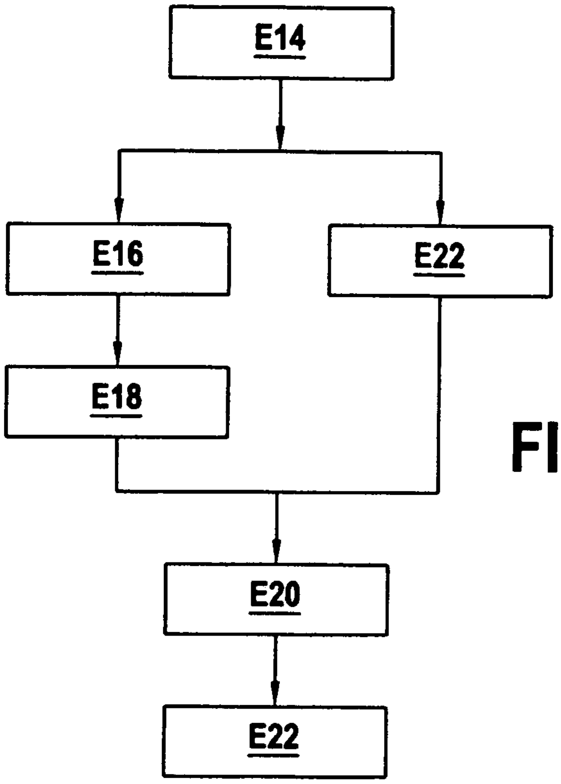


FIG.7

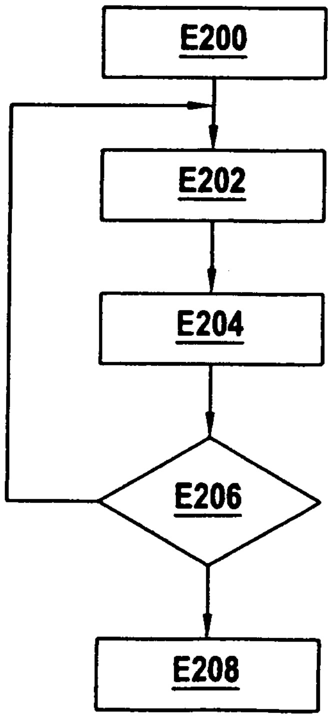


FIG.8

FIG.9

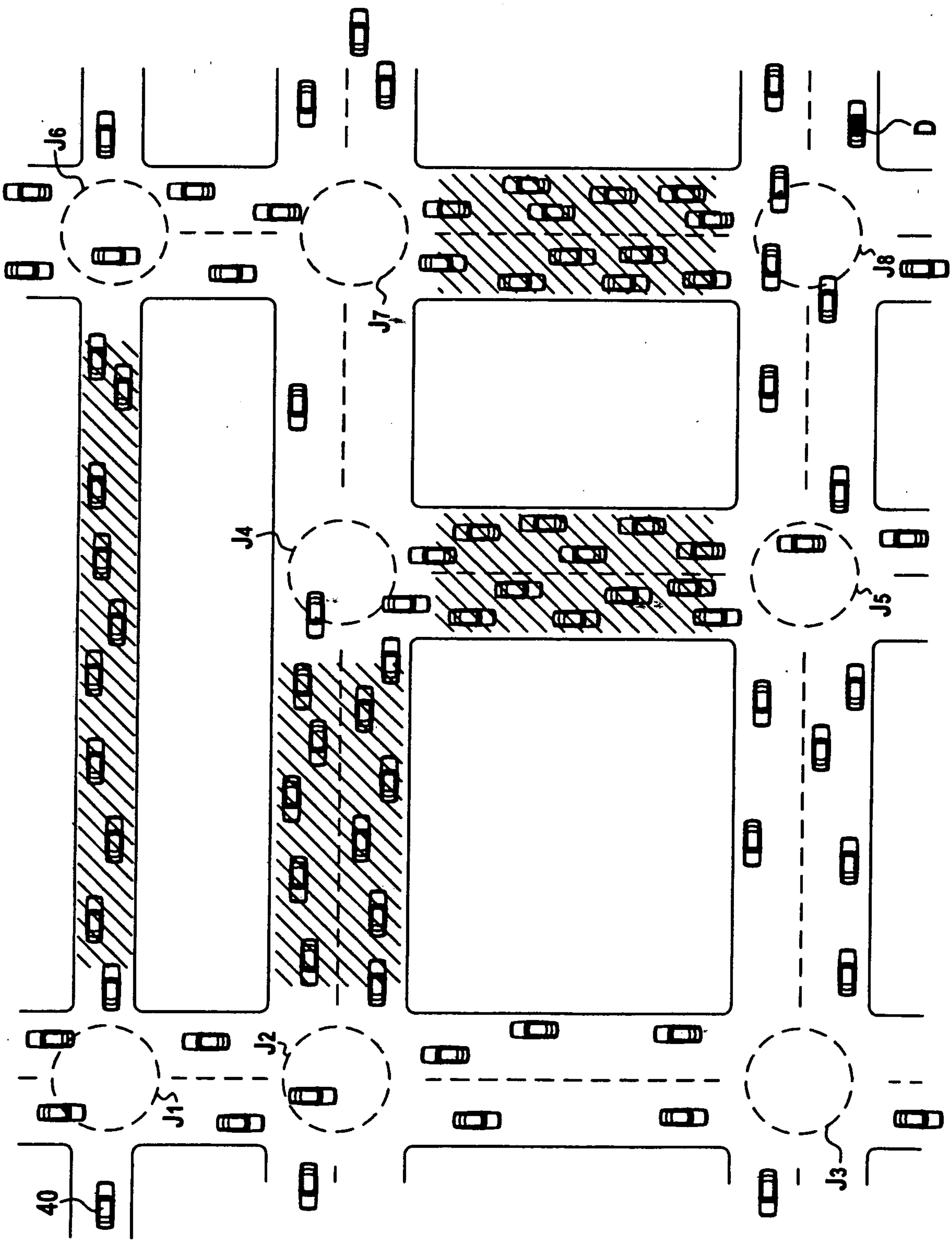

FIG.10

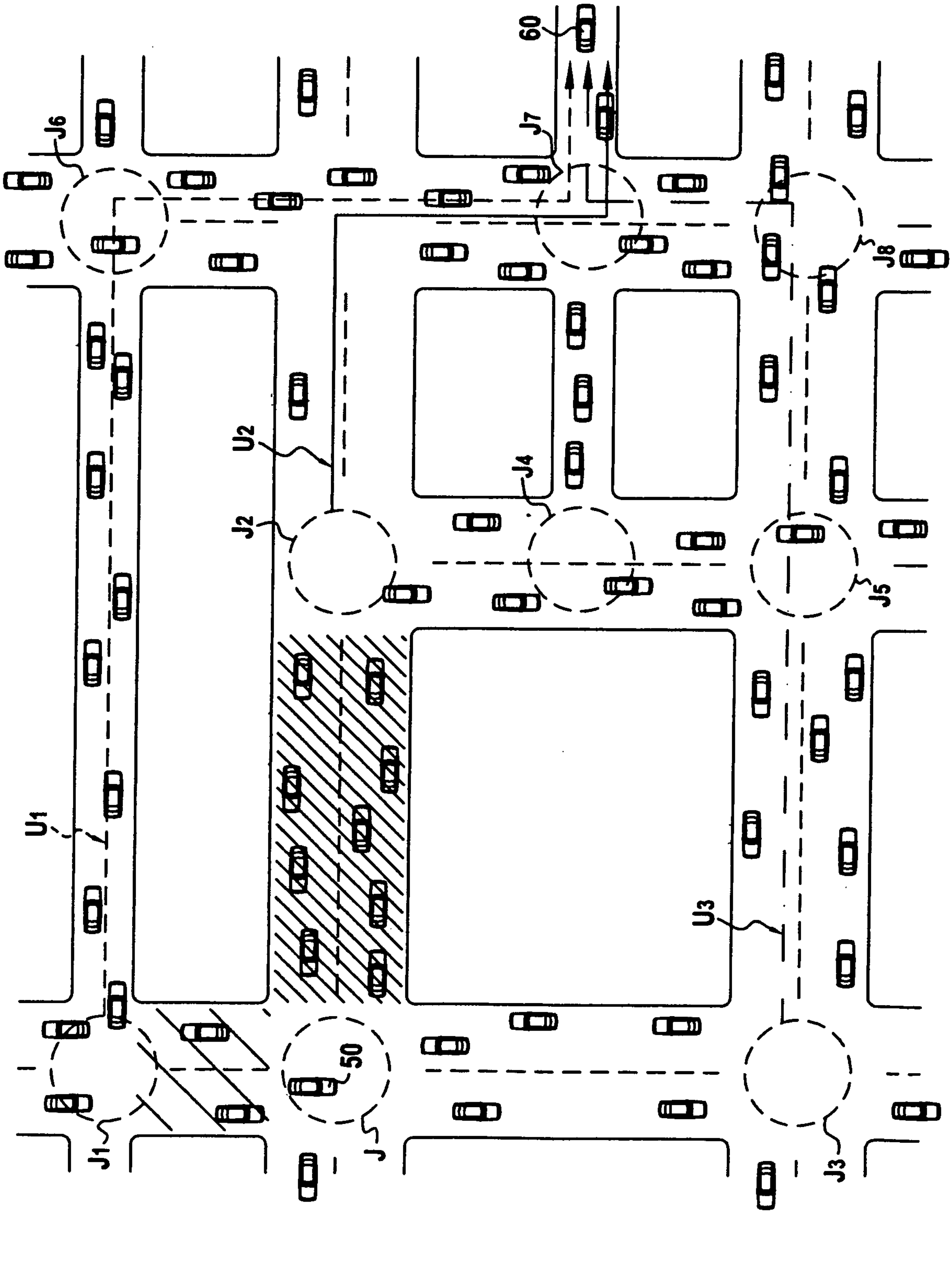

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Littérature non-brevet citée dans la description


- **RAZA et al.** Determining density in Ad hoc networks. *Electrical and Computer Engineering, Canadian conférence on IEEE,* 2006, 2160